# EUROPEAN PATENT APPLICATION

(11) **EP 4 697 329 A1**
(43) Date of publication of application: **18.02.2026**
(21) Application number: 24788417.4
(22) Date of filing: 16.02.2024
(51) Int. Cl.: G10L 25/54

(54) **INFORMATION PROCESSING DEVICE AND INFORMATION PROCESSING METHOD**

(30) Priority: 11.04.2023 JP 2023064517
(71) Applicant: Sony Group Corporation, Tokyo 108-0075 (JP)
(72) Inventor: ZHONG, Zhi, Tokyo 108-0075 (JP); SAWATA, Ryosuke, Tokyo 108-0075 (JP); TAKAHASHI, Akira, Tokyo 108-0075 (JP); TAKAHASHI, Shusuke, Tokyo 108-0075 (JP)
(74) Representative: 2SPL Patentanwälte PartG mbB
(86) International application number: PCT/JP2024/005472
(87) International publication number: WO 2024/214387

(57) **Abstract**

Provided is an information processing apparatus that searches for an audio section having a specific attribute from an audio material.

The information processing apparatus includes a search condition setting unit that sets a search condition based on a combination of a reference audio and a type of an audio attribute, and a similarity degree estimation unit that estimates a similarity degree between an input audio and the search condition. The similarity degree estimation unit estimates a similarity degree between the input audio and the reference audio on the basis of a type of an audio attribute by using a learned model. The information processing apparatus further includes a visualization control unit that performs control so as to display a transition of the similarity degree estimated by the similarity degree estimation unit along a time axis of the input audio.

## Description

### TECHNICAL FIELD

The technology (hereinafter, "the present disclosure") disclosed in this specification relates to an information processing apparatus and an information processing method that perform processing related to content creation.

### BACKGROUND ART

For example, when a creator creates movie content, there is a need to search for only a desired audio section from a huge amount of audio material such as conversation recording.

For example, an audio processing apparatus that detects a section in which a desired audio is uttered on the basis of a search keyword has been proposed (see Patent Document 1), but an audio section cannot be searched by designating a search condition other than the search keyword. In addition, if there is an input mistake of the search keyword, correct audio search is not executed.

In addition, an audio search method for searching for an audio section similar to a reference audio section by focusing on a prosody feature has been proposed (see Patent Document 2). In general, since the prosody feature is considered to be related to "attitude, intention, feeling, individuality, meaning" and the like of utterance, according to this audio search method, an audio section similar to the reference audio section is searched from various aspects, and there is no flexibility to search for an audio section in which only some of a plurality of attributes of audio data match, such as only "reverberation time" and only "speaker".

### CITATION LIST

### PATENT DOCUMENT

Patent Document 1: Japanese Patent Application Laid-Open No. 2009-216986
Patent Document 2: Japanese Patent Application Laid-Open No. 2011-69845

### SUMMARY OF THE INVENTION

### PROBLEMS TO BE SOLVED BY THE INVENTION

An object of the present disclosure is to provide an information processing apparatus and an information processing method for searching for a desired audio section from an audio material.

### SOLUTIONS TO PROBLEMS

The present disclosure has been made in view of the above problems, and a first aspect thereof is an information processing apparatus including:
a search condition setting unit that sets a search condition based on a combination of a reference audio and a type of an audio attribute; and
a similarity degree estimation unit that estimates a similarity degree between an input audio and the search condition. The similarity degree estimation unit estimates a similarity degree between the input audio and the reference audio on the basis of a type of an audio attribute by using a learned model.

The information processing apparatus according to the first aspect further includes an audio section detection unit that detects an audio section having a high similarity degree in the input audio on the basis of a result of estimation by the similarity degree estimation unit.

The information processing apparatus according to the first aspect further includes a visualization control unit that controls visualization display of an estimation result of the similarity degree estimation unit.

The visualization control unit performs control to display a transition of the similarity degree estimated by the similarity degree estimation unit along a time axis of the input audio. For example, the visualization control unit displays a similarity degree indicator in a vicinity of a position on a first axis indicating an existence section of a corresponding utterance and a position on a second axis indicating a similarity degree with a search condition on a graph having the first axis as a time axis and a second axis as a magnitude of the similarity degree. The similarity degree indicator includes, for example, a line parallel to the first axis.

Furthermore, a second aspect of the present disclosure is an information processing method including:
a search condition setting step of setting a search condition based on a combination of a reference audio and a type of an audio attribute; and
a similarity degree estimation step of estimating a similarity degree between an input audio and a search condition using a learned model.

### EFFECTS OF THE INVENTION

According to the present disclosure, it is possible to provide an information processing apparatus and an information processing method for searching for an audio section having a specific attribute from an audio material.

Note that the effects described in the present specification are merely examples, and the effects to be brought by the present disclosure are not limited thereto. Furthermore, there are cases where the present disclosure further provides some other effects, in addition to the effects described above.

Still other objects, features, and advantages of the present disclosure will become apparent from a more detailed description based on embodiments as described later and the accompanying drawings.

### BRIEF DESCRIPTION OF DRAWINGS

Fig. 1 is a diagram illustrating a functional configuration example of an audio processing apparatus 100.
Fig. 2 is a diagram illustrating an interface example of a DNN model 200 that directly estimates a similarity degree between an input audio and a reference audio.
Fig. 3 is a diagram illustrating a functional configuration example for estimating similarity degree via calculation of numerical values of audio attributes of an input audio and a reference audio.
Fig. 4 is a diagram illustrating an assumed example of a scenario.
Fig. 5 is a diagram illustrating an example of an input audio.
Fig. 6 is a view illustrating an example of a search condition designated by a creator.
Fig. 7 is a diagram illustrating a similarity degree estimation result between the input audio illustrated in Fig. 5 and the search condition illustrated in Fig. 6.
Fig. 8 is a diagram illustrating an example in which a transition of the similarity degree between the input audio and the search condition is visualized.
Fig. 9 is a diagram illustrating an example in which a similarity degree estimation result for audio data having a long data length is visualized.
Fig. 10 is a diagram illustrating an example in which a box in which a plurality of utterance sections is aggregated is enlarged and displayed.
Fig. 11 is a diagram illustrating an example in which a transition of a similarity degree for a plurality of audio attributes is simultaneously visualized.
Fig. 12 is a diagram illustrating another example (an example of being indicated in parallel using another graph) in which the transition of the similarity degree for a plurality of audio attributes is simultaneously visualized.
Fig. 13 is a diagram illustrating still another example (an example of using a heat map) in which the transition of the similarity degree for a plurality of audio attributes is simultaneously visualized.
Fig. 14 is a diagram illustrating still another example (an example of using a three-dimensional graph) in which the transition of the similarity degree for a plurality of audio attributes is simultaneously visualized.
Fig. 15 is a diagram illustrating an example of simultaneously visualizing a transition of a similarity degree for a plurality of audio attributes for long audio data.
Fig. 16 is a diagram illustrating another example of simultaneously visualizing the transition of the similarity degree for a plurality of audio attributes for long audio data.
Fig. 17 is a flowchart illustrating a processing procedure performed by the audio processing apparatus 100.
Fig. 18 is a diagram illustrating a state in which reverberation transfer processing is performed on a desired audio section of an input audio.
Fig. 19 is a flowchart illustrating a processing procedure for automatically adjusting a visualization method of a similarity degree estimation result.
Fig. 20 is a diagram illustrating a hardware configuration example of an information processing apparatus 2000.

### MODE FOR CARRYING OUT THE INVENTION

Hereinafter, embodiments of the present disclosure will be described with reference to the drawings in the following order.

A. Outline
B. Functional Configuration
C. Setting of Search Condition and Estimation of Similarity
   C-1. Detailed Description of Components
   C-2. Application Example to Movie Content Production
   C-3. Example of Scenario
D. Visualization of Similarity Estimation Result
   D-1. Basic Visualization Method of Estimation Result
   D-2. Visualization Method of Estimation Result for Long Audio Data
   D-3. Simultaneous Visualization of Plurality
   of Attributes
E. Processing Operation
   E-1. Overall Operation
   E-2. Automatic Adjustment of Visualization Method
F. Configuration of Information Processing Apparatus

### A. Outline

In order to realize a high sense of realistic feeling and immersion in a movie work, a creator must finely adjust audio data such as conversation in addition to video. For example, there is a case where the sense of immersion is enhanced by adjusting the reverberation of audio data recorded in a certain room. At that time, it is necessary to search for recorded data having a reverberation characteristic of a specific room. Furthermore, in addition to the reverberation characteristic, the creator may want to check only a certain section of the file (audio material) being edited by using the audio attribute such as an utterer, a reverberation time, and the feeling of the utterance. At that time, if an attempt is made to manually search for the corresponding audio section, a work error may occur and work efficiency may be reduced. Therefore, a tool for automatically searching for an audio section (hereinafter, also referred to as "target audio section") having an attribute that attracts attention of the creator is required.

When "audio attribute" is decomposed, it is divided into "type" and "numerical value" of the attribute. In a case where the creator desires to search for only a part of the audio sections of the audio material, it is necessary to simultaneously know and set the "type" and the "numerical value" of the desired audio attribute. In particular, in order to perform the search accurately, it is necessary to correctly handle a fine numerical value of the audio attribute, but it is inconvenient for the creator to directly handle a fine "numerical value". However, it is difficult to accurately search for the target audio section from arbitrary audio data without directly touching a fine numerical value.

In one audio recording, there are many audio attributes such as an utterer, a reverberation time, and a feeling of utterance. In a method in which a user (creator or the like) manually inputs a fine numerical value of each attribute to search for a desired audio section, user experience is deteriorated. However, it is difficult for the user to perform audio search intended by the user since it is not clear as to what kind of search condition the user desires to search for the audio section without touching the fine numerical value.

In addition, in the method of searching for the audio section by using some audio data as a search condition instead of a numerical value, the user can estimate and use the audio section from the query without knowing the numerical value of some audio attribute, but since the "type" of the audio attribute cannot be flexibly set, it is easy to fall into an estimation result unintended by the user.

In short, in a case where an audio section having a specific attribute is searched from an audio material, there are mainly the following problems.

(Problem 1) It is inconvenient for the user to directly handle numerical values of fine attributes, and there is a risk of deteriorating user experience.

(Problem 2) In a case where reference audio is searched as a query, a search criterion (search condition) cannot be flexibly designated, and an unintended estimation result is likely to occur. Even if the audio section that does not match the user's intention is detected from the original audio material, the high-performance audio attribute numerical analysis technology is not useful.

(Problem 3) Visualization of the audio attribute is insufficient, and it is difficult to grasp the entire image of the recording during work. If the visualization result is not sufficiently readable, the user cannot use the estimation result well.

Therefore, the present disclosure proposes an audio search technology that correctly estimates a user's intention from "reference audio" and then provides a user experience (experience of not touching a numerical value) that allows intuitive operation. However, the "reference audio" referred to in the present specification is audio data having attributes (numerical values and types) serving as search conditions. The audio search technology according to the present disclosure is implemented by the following procedure.

### (Procedure 1) Preparation of Model

First, a model for estimating the similarity degree between the input audio (editing file) and the search condition desired by the user is prepared. Specifically, the model is a deep learned DNN model. The input of the DNN is the input audio and the search condition, and the output is a numerical value from 0 to 1 representing the similarity degree between the input audio and the search condition. The input audio is an editing file such as an audio material to be searched. The search condition is set on the basis of a combination of a reference audio for correctly estimating the user's intention and an attribute desired by the user. The audio attribute includes a combination of a numerical value and a type, but it is inconvenient for the user to directly handle a fine numerical value. On the other hand, in the present disclosure, the user can designate a rough audio attribute (that is, only the type of the audio attribute) and set the search condition on the basis of the reference audio and the rough audio attribute. The numerical value of the audio attribute may be automatically acquired from the reference audio at the time of similarity degree estimation.

### (Procedure 2) Preparation of Reference Audio

In the present disclosure, a user is requested to prepare a reference audio in order to acquire a search condition. For example, a large number of sample audio data that can be used as reference audio may be prepared, and the user may be allowed to designate the sample audio data to be used as a search condition from among the sample audio data at the time of audio search. Alternatively, the audio section designated by the user may be cut out from the input audio (editing file) to be searched and used as the reference audio. Then, by combining the reference audio provided by the user with a rough audio attribute (that is, only the type of the audio attribute) designated by the user, the user can set a more flexible search condition.

### (Procedure 3) Audio Search Using Learned Model

When the learned model prepared in the above (procedure 1) receives the reference audio prepared in the above (procedure 2) and the search condition set on the basis of the rough audio attribute, the learned model directly estimates the similarity degree between the input audio and the search condition. Then, it is possible to present, to the user, an audio section of the input audio in which the similarity degree with the search condition exceeds the threshold.

### (Procedure 4) Visualization of Similarity Estimation Result

Finally, the similarity degree estimation result using the learned model is visualized on a user interface (UI) screen. Specifically, the transition of the similarity degree estimated for each audio section by the learned model is displayed along the time axis of the editing file.

Therefore, the audio search technology according to the present disclosure mainly has the following features.

### (Feature 1) Acquisition of Specific Search Conditions

Since it is inconvenient to directly handle fine numerical values, the user designates rough audio attributes (that is, only the type of the audio attribute). In the present disclosure, a specific numerical value of the audio attribute desired by the user can be acquired from the reference audio, and a search condition can be set by combining these values. Then, the learned model directly estimates the similarity degree between the editing file and the search condition, and searches for the audio section in which the similarity degree exceeds the threshold.

For example, examples of the type of the audio attribute include speaker, reverberation, utterance feeling, and the like, and from these, the user designates "reverberation time" as a desired attribute type together with the reference audio. The user can perform audio search matching the user's intention on the basis of the reverberation time included in the reference audio without designating a fine numerical value regarding the "reverberation time".

### (Feature 2) Flexibility of Search Condition Setting

When inputting the search condition, the user can designate a plurality of types of audio attributes and freely combine them as the search condition. Types of audio attributes include speaker, reverberation, utterance feeling, and the like, and not only "reverberation time" but also "speaker" or "utterance feeling" can be simultaneously designated and freely combined. In addition, the user can perform the audio search matching the user's intention using the combination of the reference audio and the type of the audio attribute as the search condition without designating a fine numerical value for the type of each designated audio attribute. Therefore, according to the present disclosure, it is possible to flexibly perform audio search corresponding to various scenarios.

### (Feature 3) Provision of Similarity Estimation Result Visualization GUI

According to the present disclosure, it is possible to provide a GUI that displays the transition of the similarity degree estimated for each audio section by the learned model along the time axis of the editing file. The visualization method of the similarity degree estimation result can be automatically adjusted according to the length of the audio data presented on the GUI and the number of titles for the audio data (such as the number of audio sections hit in the audio search).

For example, one audio section is set for each utterance. When the similarity degree estimation result of the editing file having a short time length is visualized, the similarity degree is indicated by using different line types (solid line and dotted line) in units of utterances. On the other hand, when the similarity degree estimation result of the editing file having a long time length is visualized, a plurality of utterances having a short time is aggregated and displayed in one block to improve the visibility. Thus, it is possible to automatically adjust the visualization method of the similarity degree estimation result according to the number of utterances to be displayed simultaneously. In addition, it is possible to automatically adjust the visualization method according to the type (reverberation characteristic, recording quality, feeling of utterance, and the like) of the audio attribute important for content creation. Therefore, since the transition of the similarity degree with the search condition according to time is visualized in the editing file, the user can efficiently grasp the entire image of the editing file.

In a case where the audio search technology according to the present disclosure is applied to production of movie content, it leads to improvement in work efficiency and work accuracy of the creator. For example, there are the following effects.

(Effect 1) When the reference audio is designated, the audio section matching the user's intention can be searched from the editing file without knowing a specific attribute numerical value.

(Effect 2) By not only designating one attribute but also setting a search condition by freely combining a plurality of attributes, it is possible to flexibly respond to the needs of the creator.

(Effect 3) Since the transition of the similarity degree with the search condition is visualized along the time axis of the editing file, the creator can efficiently grasp the entire image of the recorded data.

### B. Functional Configuration

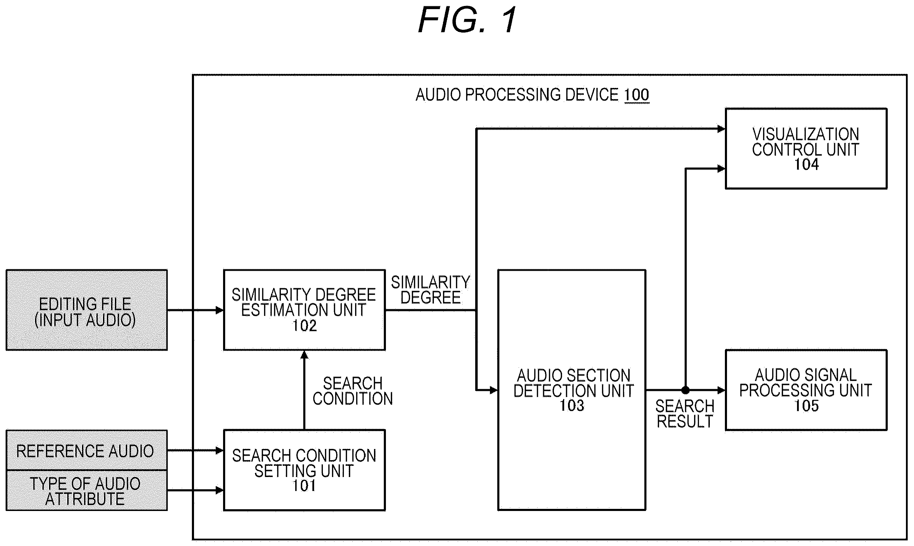

Fig. 1 illustrates a functional configuration example of an audio processing apparatus 100 to which the present disclosure is applied. The audio processing apparatus 100 is a device for performing audio signal processing such as reverberation transition and various types of audio emphasis on each audio section of input audio such as recorded data, and has a function of detecting an audio section having a specific attribute in the input audio. The "recorded data" mentioned here is, for example, an editing file for an audio included in movie content, and a "user" who performs audio search and audio editing work using the audio processing apparatus 100 is a creator of the movie content.

The audio processing apparatus 100 receives reference audio and a desired audio attribute as search conditions from the user. However, although the audio attribute includes a numerical value and a type, the user only needs to designate only the type, that is, a rough audio attribute. Then, in the audio processing apparatus 100, the search condition is set by correctly estimating the user's intention represented by the type of the audio attribute from the reference audio, and the audio section having the audio attribute that the user desires to search is detected from arbitrary recorded data.

The audio processing apparatus 100 illustrated in Fig. 1 includes a search condition setting unit 101, a similarity degree estimation unit 102, an audio section detection unit 103, a visualization control unit 104, and an audio signal processing unit 105. Each of the components 101 to 105 of the audio processing apparatus 100 can be realized as a dedicated hardware device, or can be implemented in a form in which a computer program is executed on an information processing apparatus such as a personal computer (PC). For example, each of the components 101 to 105 can be provided as a plug-in that extends the function of the audio editing software.

The search condition setting unit 101 receives the reference audio and the type of the desired audio attribute as the search conditions, performs necessary preprocessing, then sets the search conditions, and outputs the search conditions to the similarity degree estimation unit 102. Although the audio attribute includes a numerical value and a type, the search condition setting unit 101 receives only the type of the audio attribute, that is, a rough audio attribute from the user, and correctly estimates the user's intention represented by the type of the audio attribute from the reference audio, thereby setting the search condition.

Note that the user may select one to be used as the reference audio from a large number of sample audio data prepared in advance and input the selected one to the search condition setting unit 101, or may designate a part of the audio sections from the input audio to be searched (that is, it is input to the audio processing apparatus 100) as the reference audio and input the designated reference audio to the search condition setting unit 101. In addition, the user can simultaneously designate a plurality of audio attributes to the search condition setting unit 101.

When audio data to be subjected to audio search is input and the search condition set by the search condition setting unit 101 is received, the similarity degree estimation unit 102 directly estimates the similarity degree between the input audio and the search condition. The input audio is, for example, an editing file such as audio data included in movie content. Then, the similarity degree estimated in each audio section is output to the audio section detection unit 103 and the visualization control unit 104 in the subsequent stage. The audio section may be in units of utterances. Note that, in a case where a plurality of types of audio attributes is simultaneously designated as the search condition by the search condition setting unit 101, the similarity degree estimation unit 102 estimates the similarity degree of the input audio for each type of the designated audio attribute. Alternatively, the similarity degree estimation unit 102 may estimate the similarity degree of the input audio by fusing a plurality of types of designated audio attributes as one large condition.

In the present embodiment, the similarity degree estimation unit 102 estimates a numerical value from 0 to 1 representing the similarity degree between the input audio and the search condition by using a learned model learned to estimate the similarity degree between the input audio and the search condition desired by the user. Specifically, the model is a deep learned DNN model.

Upon receiving the similarity degree between the input audio and the search condition from the similarity degree estimation unit 102, the audio section detection unit 103 detects an audio section in which the similarity degree with the search condition exceeds a threshold in the input audio as an audio section desired by the user, and outputs the audio section to the visualization control unit 104 and the audio signal processing unit 105 in the subsequent stage. The threshold may be adjustable such that the user adjusts the accuracy of the detection by himself/herself.

The visualization control unit 104 appropriately controls the visualization of the similarity degree between the input audio and the search condition received from the similarity degree estimation unit 102 and the display of the audio section detection result received from the audio section detection unit 103. For example, the visualization control unit 104 performs UI display of the transition of the similarity degree estimated for each audio section along the time axis of the editing file. Furthermore, the visualization control unit 104 automatically adjusts the visualization method of the similarity degree estimation result according to the length of the audio data presented on the UI and the number of titles for the audio data (the number of audio sections hit in the audio search, and the like). Note that, in a case where a plurality of audio attributes is simultaneously designated as the search condition by the search condition setting unit 101 and the similarity degree of the input audio is estimated for each of the plurality of audio attributes by the similarity degree estimation unit 102, the visualization control unit 104 can simultaneously visualize the similarity degree estimation results for the plurality of audio attributes. The visualization processing by the visualization control unit 104 will be described in detail in the section D described later.

The audio signal processing unit 105 has a function of adding various types of processing to the audio signal. On the basis of the detection result by the audio section detection unit 103, the user can add processing for obtaining desired audio data using the audio signal processing unit 105 on the audio section having high similarity degree to the reference audio. Alternatively, while confirming the similarity degree estimation result presented by the visualization control unit 104, the user can add processing for obtaining desired audio data to the editing file as the input audio using the audio signal processing unit 105. The audio signal processing includes, for example, functions such as reverberation transfer and various types of audio emphasis. However, for example, a function may be added as a plug-in.

### C. Setting of Search Condition and Estimation of Similarity

The search condition setting unit 101 sets a search condition for searching the audio data for a desired audio section, and the similarity degree estimation unit 102 directly estimates the similarity degree between the input audio and the search condition. It is output to the similarity degree estimation unit 102. In this section C, the setting of the search condition and the estimation of the similarity degree will be described in more detail.

### C-1. Detailed Description of Components

The search condition setting unit 101 sets a search condition on the basis of a combination of a reference audio for correctly estimating the user's intention and an audio attribute desired by the user. The audio attribute includes a numerical value and a type. The user can designate, for example, the following types of audio attributes to the search case setting unit 101. That is, the user only needs to designate only a rough audio attribute to the search case setting unit 101, and does not need to designate a numerical value of the audio attribute.

· Presence or absence of utterance:
   · Section with utterance
   · Section with noise
   · Silent section
· Recording quality:
   · Magnitude of background noise
   · Presence or absence of distortion such as clipping
   · Utterer: person who utters
   · Reverberation characteristics:
      · Length of reverberation
      · Intensity of reverberation
      · Feeling of utterance:
         · Sad/happy/etc

It is inconvenient for the user to directly handle a fine numerical value of the audio attribute. On the other hand, in the present disclosure, the search condition setting unit 101 receives only the type of the audio attribute, that is, the rough audio attribute from the user. In addition, the search condition setting unit 101 receives the reference audio prepared by the user. Therefore, the user can set a flexible search condition on the basis of the reference audio and the rough audio attribute and perform audio search matching the intention. Note that there may be a certain correspondence between the type of the audio attribute and the numerical value. For example, the type of the audio attribute "magnitude of background noise" corresponds to "noise level =30 dB" as a numerical value, and the type of the audio attribute "reverberation time" corresponds to "T60=0.932 seconds" as a numerical value. Furthermore, although "reverberation length/reverberation time" looks like "numerical value of audio attribute" at a glance, it is treated as "type of audio attribute" in the present disclosure, and therefore, the user does not need to designate a specific numerical value such as "0.932 seconds". The search condition setting unit 101 and the similarity degree estimation unit 102 in the subsequent stage may automatically acquire a numerical value related to the attribute of the audio attribute designated by the user from the reference audio on the basis of the correspondence relationship.

Note that the reference audio may be selected by the user from a large number of sample audio data prepared in advance and available as the reference audio. Alternatively, the audio section designated by the user may be cut out from the input audio (editing file) to be searched and used as the reference audio.

In addition, when inputting the search condition, the user can designate a plurality of types of audio attributes and freely combine them as the search condition. Types of audio attributes include speaker, reverberation, utterance feeling, and the like, and not only "reverberation time" but also "speaker" or "utterance feeling" can be simultaneously designated and freely combined. Therefore, the search condition setting unit 101 can flexibly set the search condition for audio search corresponding to various scenarios according to the user's intention.

The similarity degree estimation unit 102 directly estimates the similarity degree between the input audio and the search condition using the learned model, and estimates a numerical value from 0 to 1 representing the similarity degree with the search condition for each audio section. The audio section may be in units of utterances. The model is a model pre-learned to directly estimate the similarity degree between the input audio (editing file) and the search condition desired by the user, and specifically, is a deep learned DNN model. The similarity degree estimation unit 102 may automatically acquire a numerical value related to the attribute of the audio attribute designated by the user to the search case setting unit 101 from the reference audio. There may be a certain correspondence between the type of the audio attribute and the numerical value (described above). The similarity degree estimation unit 102 may acquire a numerical value related to the attribute of the audio attribute designated by the user on the basis of the correspondence relationship between the type of the audio attribute and the numerical value.

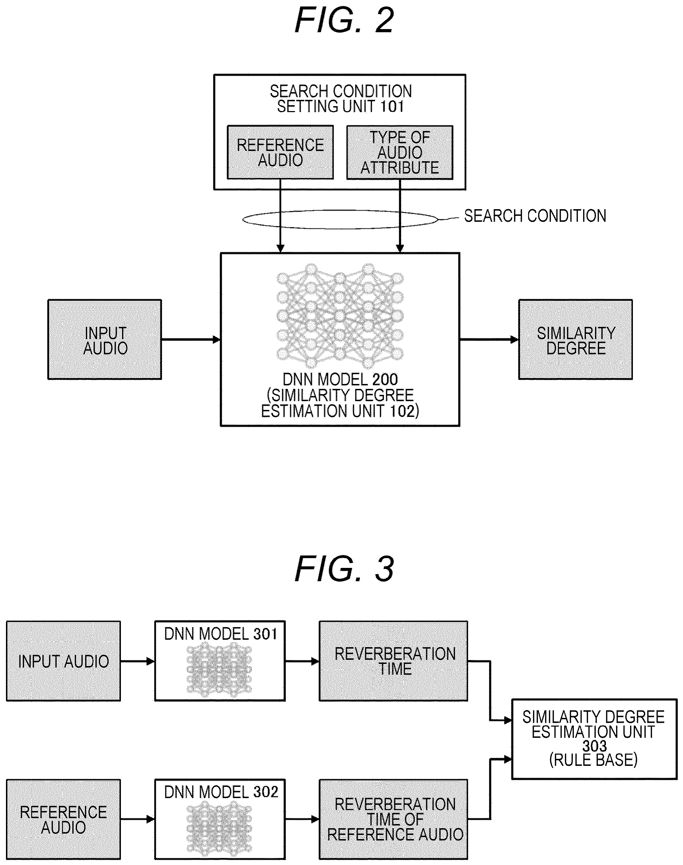

Fig. 2 illustrates an interface example of a DNN model 200 used in the similarity degree determination unit 102 to directly estimate the similarity degree between the input audio and the search condition. The illustrated DNN model 200 is pre-learned so as to directly estimate the similarity degree between the input audio and the search condition by using the input audio and the search condition as inputs and the similarity degree between the input audio and the search condition as outputs.

The input audio is, for example, audio data such as an editing file included in movie content. The search condition includes a combination of reference audio and a type of audio attribute. The similarity degree is a numerical value from 0 to 1 representing the similarity degree with the search condition for each audio section.

Types of audio attributes include speaker, reverberation, utterance feeling, and the like. The user designates the "reverberation time" as the attribute type, but does not designate a fine attribute value. When receiving the type "reverberation time" of the audio attribute together with the reference audio prepared by the user, the search condition setting unit 101 transfers these to the similarity degree estimation unit 102 as they are. In the similarity degree estimation unit 102, the DNN model 200 does not directly calculate the "reverberation time", but directly estimates the similarity degree between the input audio and the reference audio on the basis of the "reverberation time".

In comparison with Fig. 2, Fig. 3 illustrates a functional configuration example for estimating the similarity degree between the input audio and the reference audio via a result of calculating the numerical value of the audio attribute designated by the user for each of the input audio and the reference audio. In the configuration example illustrated in Fig. 3, two DNN models of a DNN model 301 for estimating the reverberation time of the input audio and a DNN model 302 for estimating the reverberation time of the reference audio are used. Then, the rule-based similarity degree estimation unit 303 is configured to estimate the similarity degree between the input audio and the reference audio via an intermediate variable called "reverberation time" estimated by each DNN model 301 and 302, that is, on the basis of the reverberation times of both audios. On the other hand, in the configuration example illustrated in Fig. 2, since the similarity degree between the input audio and the reference audio is directly estimated without passing through the intermediate variable, only one DNN model 200 is used. According to the configuration example illustrated in Fig. 2, since the similarity degree between the audios is directly estimated, it can be said that the DNN model to be used is optimized for the task of similarity degree estimation. Therefore, it can be said that the configuration example illustrated in Fig. 2 is a more optimal embodiment as the similarity degree estimation unit 102.

### C-2. Application Example to Movie Content Production

Next, a specific example of the setting of the search condition and the estimation of the similarity degree will be described by taking a case where the creator creates movie content as an example.

There are the following needs, for example, when editing the audio material in the production of the movie content.

(Needs 1) Wish to correct all audio sections uttered by specific speaker in recorded data, where are they?
(Needs 2) Wish to check all portions with specific reverberation characteristic (for example, strong reverberation like museum) in audio section uttered by specific speaker, where are they?
(Needs 3) How similarity degree between input audio and reference audio changes for each utterance?

If the creator attempts to view and confirm all sound sources, problems such as frequent occurrence of work errors and a decrease in work efficiency arise. Therefore, in the production of movie content, there is a need to search for a desired audio section from a huge amount of audio material such as conversation recording.

When the creator directly inputs detailed search conditions, accurate audio search can be performed. However, it is inconvenient for the user to directly handle the numerical value of the fine audio attribute, and there is a problem that user experience is deteriorated. For example, it is inconvenient for the user to directly handle not only the speaker ID of the specific speaker to be searched and the type of reverberation characteristic to be searched but also the reverberation time.

On the other hand, in the present embodiment, the creator can provide the reference audio, and further, the type of the audio attribute of the reference audio can be used as the search condition. If reference audio is used instead of a fine numerical value of the audio attribute, the intention of the creator can also be estimated. As described above, the search condition setting unit 101 can receive the reference audio together with the type of the audio attribute, and the similarity degree estimation unit 102 estimates the similarity degree between the input audio and the reference audio on the basis of the type of the audio attribute.

For example, in an audio search method (see Patent Document 2) of searching for an audio section similar to a reference audio section by focusing on a prosody feature, a search condition cannot be flexibly set, and an audio section similar to the reference audio section is searched from various aspects. Therefore, there is a problem that an estimation result deviating from the creator's intention is likely to be obtained. When the similarity degree between the input audio and the reference audio is calculated, a plurality of audio attributes is simultaneously considered, and as a result, only the audio section of the perfect match is detected. In practice, the creator does not obtain an audio section that exactly matches the reference audio, but obtains an audio section similar to the reference audio for the audio attribute of interest.

On the other hand, in the present embodiment, the creator can designate the type of the audio attribute as the search condition together with the reference audio. Therefore, the creator can flexibly set the search condition, and audio search matching the intention is enabled. As described above, the search condition setting unit 101 receives the type of the audio attribute together with the reference audio, and the similarity degree estimation unit 102 estimates the similarity degree between the input audio and the reference audio on the basis of the type of the audio attribute. For example, if the creator provides a reference audio having a specific reverberation characteristic and designates the reverberation characteristic as the type of the audio attribute, the similarity degree estimation unit 102 estimates the similarity degree between the input audio and the reference audio on the basis of the reverberation characteristic. Therefore, the audio section detection unit 103 can detect an audio section having a similar reverberation characteristic on the basis of the calculated similarity degree. In short, in the present embodiment, the audio section similar to that of the reference audio can be searched for the audio attribute of interest obtained by the creator.

### C-3. Example of Scenario

Next, setting of a search condition and estimation of the similarity degree in the audio processing apparatus 100 according to the present embodiment will be described with a scenario in which the creator is working on audio data of a certain editing file as a specific example.

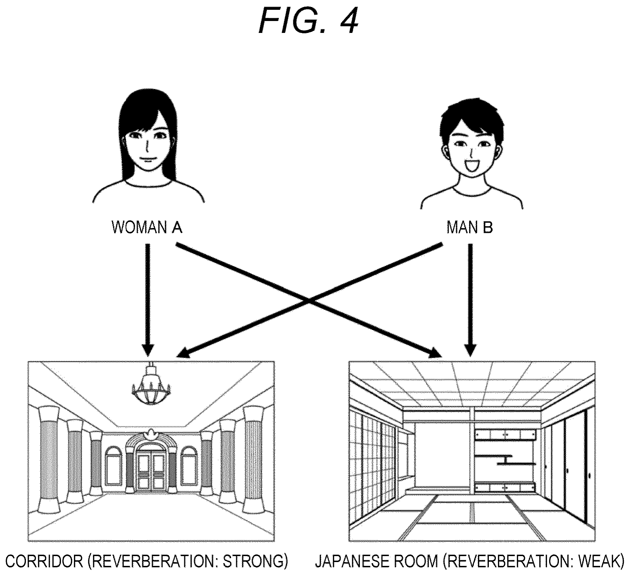

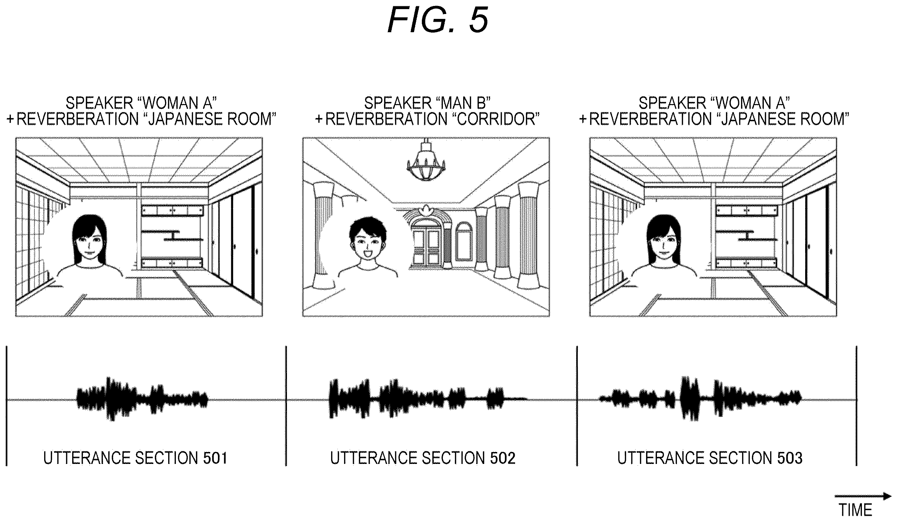

Here, for simplification of description, it is assumed that the audio data of the edit file to be searched includes the utterance audios of two speakers, "woman A" and "man B", as speakers, and includes two types of audio attributes, "corridor" with strong reverberation and "Japanese room" with weak reverberation (see Fig. 4), and the audio data includes an utterance section combining these two types of audios and two types of reverberation. Specifically, an editing file (see Fig. 5) in which an utterance section 501 in which the woman A utters in a Japanese room, an utterance section 502 in which the man B utters in a corridor, an utterance section 503 in which the woman A utters in a Japanese room, ... are alternately switched is input as the input audio to be searched to the similarity degree estimation unit 102.

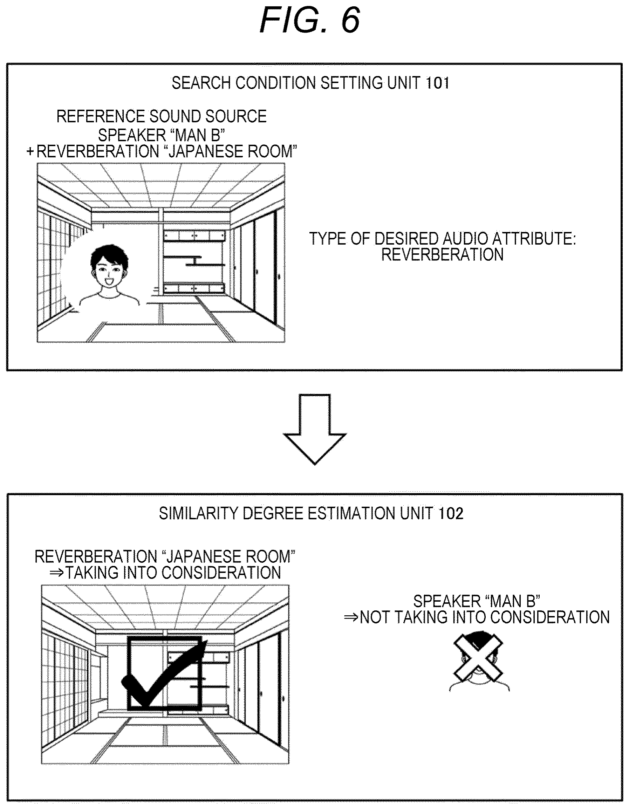

The creator can provide the reference audio, and can flexibly set the search condition by using the type of the audio attribute of the reference audio as the search condition. For example, as illustrated in Fig. 6, it is assumed that the creator uses, as a reference audio, audio data when the man B utters in a Japanese room, and designates reverberation as a type of a desired audio attribute in the search condition setting unit 101.

As illustrated in the upper part of Fig. 6, the search condition setting unit 101 receives reverberation as the type of the audio attribute together with the reference audio prepared by the user. If reference audio is used instead of a fine numerical value of the audio attribute, the intention of the creator can also be estimated. The search condition setting unit 101 can receive the reference audio and the type of the audio attribute from the user through, for example, the following Q & A interaction with the user.
Q: What kind of audio attribute does the user search for the audio?
A: "Reverberation".
Q: I understand the type of audio attribute. However, what kind of "reverberation" do you want to search specifically?
A: Although the reverberation time, intensity, and the like are not specifically known, please refer to the reverberation present in this "reference audio".

Then, as illustrated in the lower part of Fig. 6, the similarity degree estimation unit 102 in the subsequent stage estimates the similarity degree between the input audio and the reference audio on the basis of reverberation designated as the audio attribute without considering the audio of the man B included in the reference audio. Therefore, audio search based on the reverberation characteristic of the reference audio can be performed while ignoring speaker characteristics. It is only required for the user to provide only "reverberation" as the type of the audio attribute, and the user does not need to provide the type of the audio attribute with specific words such as "Japanese room" as long as the reference audio expressing the desired "impression brought by the numerical characteristic of reverberation" is provided.

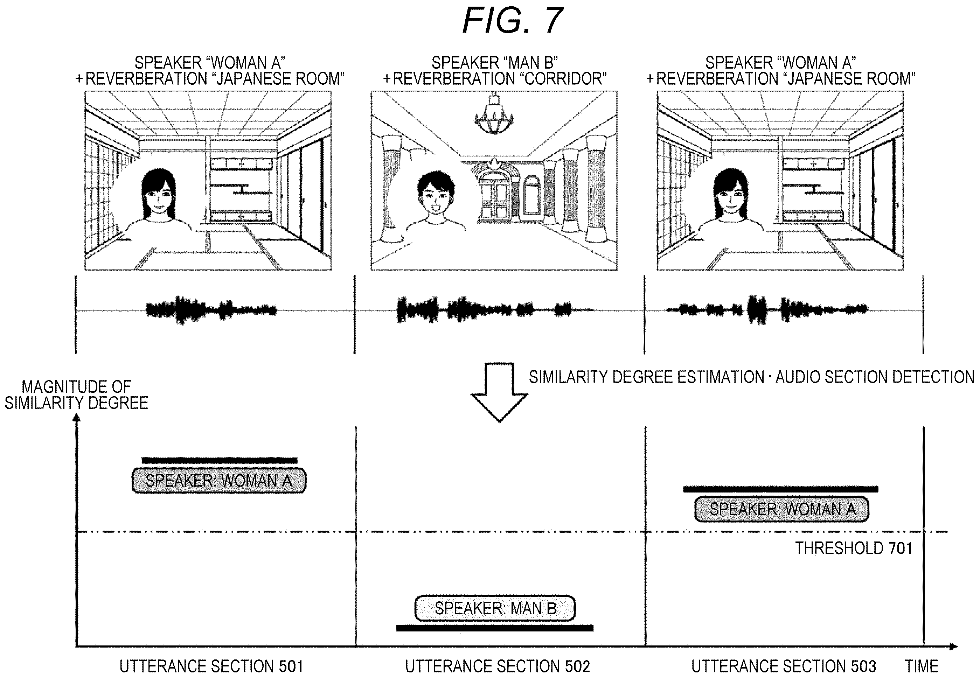

Fig. 7 illustrates a similarity degree estimation result between the input audio and the search condition. However, the lower part of Fig. 7 is a graph in which the horizontal axis is the time axis, the vertical axis is the magnitude of the similarity degree, and the transition of the similarity degree is expressed along the time axis of the input audio. In the graph, the input audio is illustrated in Fig. 5, and the similarity degree is a result of the similarity degree estimation unit 102 estimating the similarity degree between the input audio and the search condition illustrated in Fig. 6 along the time axis. The visualization control unit 104 can visualize the estimation result by the similarity degree estimation unit 102 using the graph in the format illustrated in the lower part of Fig. 7. As can be seen from Fig. 7, since the similarity degree is calculated on the basis of the reverberation "Japanese room", the similarity degree of the audio section in which the speaker is woman A different from the reference audio but the reverberation is "Japanese room" is high among the input audios. On the other hand, since the speaker is not designated as the audio attribute, and thus the audio of the man B included in the reference audio is ignored, the similarity degree of the audio section in which the speaker is the same male B as the reference audio but the reverberation is not "Japanese room" but "corridor" in the input data is low.

The audio section detection unit 103 in the subsequent stage can detect an audio section in which the speaker is the woman A but the reverberation is "Japanese room" on the basis of the similarity degree estimation result illustrated in Fig. 7. The audio section detection unit 103 can set a threshold 701 and detect an audio section in which the similarity degree exceeds the threshold 701 as an audio section desired by the user. The audio section detection unit 103 may adjust the threshold 701 such that the user adjusts the accuracy of detection by himself/herself. In addition, the visualization control unit 104 may indicate the threshold 701 on the graph.

The user can add processing of obtaining desired audio data using the audio signal processing unit 105 on the audio section with high similarity degree detected by the audio section detection unit 103. The audio signal processing includes, for example, functions such as reverberation transfer and various types of audio enhancement. For example, the audio signal processing unit 105 can convert reverberation of the detected audio section from "Japanese room" to "corridor".

### D. Visualization of Similarity Estimation Result

When the audio attribute is insufficiently visualized at the time of displaying the audio result, it is difficult to grasp the entire image of the recording during work. If the visualization result is not sufficiently readable, the user cannot make good use of the estimation result.

In addition, when the similarity degree estimation result for long audio data is displayed, it is difficult to read the title due to the influence of scale, and it is difficult to confirm the title and to select the section.

Furthermore, conventionally, the audio attribute that can be visualized is generally limited to the utterance existence section and the clipping section, and important attributes for content production, such as a reverberation characteristic, recording quality, and utterance feeling, are not supported.

On the other hand, in the audio processing apparatus 100 according to the present embodiment, the visualization control unit 104 is configured to appropriately control the visualization of the similarity degree between the input audio and the search condition and the display of the audio section detection result.

### D-1. Basic Visualization Method of Estimation Result

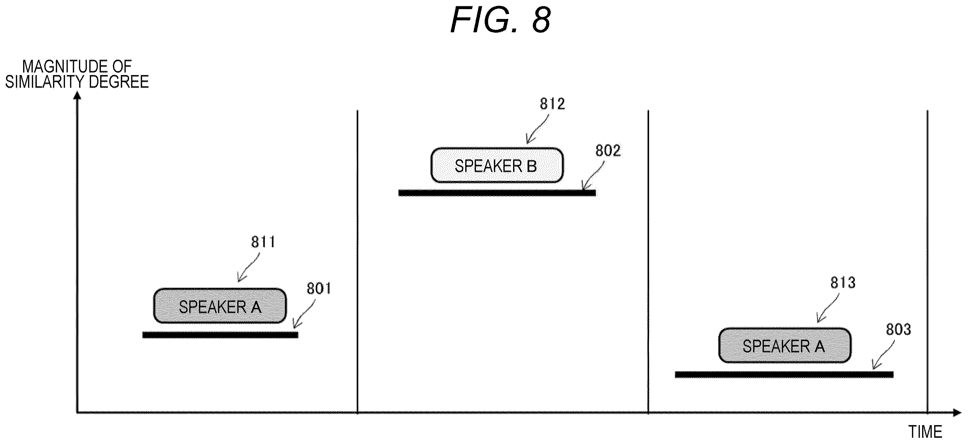

In the audio processing apparatus 100 according to the present embodiment, the visualization control unit 104 visualizes the transition of the similarity degree estimated for each audio section by performing UI display along the time axis of the editing file. Fig. 8 illustrates an example in which the transition of the similarity degree between the input audio and the search condition is visualized. As illustrated in Fig. 8, the visualization control unit 104 displays the transition of the similarity degree between the input audio and the search condition along the time axis of the input audio on the graph with the horizontal axis as the time axis and the vertical axis as the magnitude of the similarity degree.

In Fig. 8, the input audio is audio data including utterance audios of two speakers A and B, and similarity degree indicators 801, 802, 803, ... representing similarity degree to reference audios based on the type of audio attribute are arranged for each utterance section. Each of the similarity degree indicators 801, 802, 803, **...** is arranged in the vicinity of a position on the horizontal axis indicating an existence section of the corresponding utterance and a position on the vertical axis indicating a similarity degree with the search condition. In the example illustrated in Fig. 8, each of the similarity degree indicators 801, 802, 803, **...** includes a thick line parallel to the horizontal axis that is the time axis, but is not limited thereto, and the similarity degree indicator may be displayed using a figure other than the thick line or a figure not parallel to the horizontal axis. Since the similarity degree with the search condition is low in the utterance section of the speaker A and high in the utterance section of the speaker B, the similarity degree indicators 801 and 803 corresponding to the utterance section of the speaker A are arranged at low positions on the vertical axis, and the similarity degree indicator 802 corresponding to the utterance section of the speaker B is arranged at a high position on the vertical axis. A threshold (not illustrated in Fig. 8) set by the audio section detection unit 103 may be represented on a graph.

Text boxes 811, 812, 813, ... in which colors are different (in Fig. 8, the difference in color is expressed by the difference in shading) for each speaker and text information such as a speaker ID and a speaker's name is indicated are attached to vicinities (in the example illustrated in Fig. 8, it may be right above the similarity degree indicator or right below the similarity degree indicator) of the similarity degree indicators 801, 802, 803,..., and the utterer is also indicated together with the similarity degree with the search condition of each utterance section.

According to the display example as illustrated in Fig. 8, the utterance section of the input audio, the change of the speaker, and the transition of the similarity degree with the reference audio based on the type of the audio attribute designated by the user are simultaneously visualized, and the user can easily visually understand. The user can easily confirm the title for each utterance section through the screen as illustrated in Fig. 8, and can easily select a desired section and edit the audio data (adjustment of reverberation and the like).

### D-2. Visualization Method of Estimation Result for Long Audio Data

When it is attempted to display the estimation result of the entire input audio having a long data length on one screen, there is a problem that it is difficult to confirm the title and to select the section due to the influence of scale. In a case where utterance sections of a plurality of speakers are adjacent, in particular, in a case where the length of each utterance section is short, the title of each utterance section becomes complicated due to the influence of the scale, and it becomes difficult for the user to confirm the title and select the section.

On the other hand, in the audio processing apparatus 100 according to the present embodiment, the visualization control unit 104 automatically adjusts the visualization method of the similarity degree estimation result according to the length of the audio data presented on the graph and the number of titles for the audio data (the number of audio sections hit in the audio search, and the like). Specifically, the visualization control unit 104 aggregates and visualizes a plurality of adjacent utterance sections in one box.

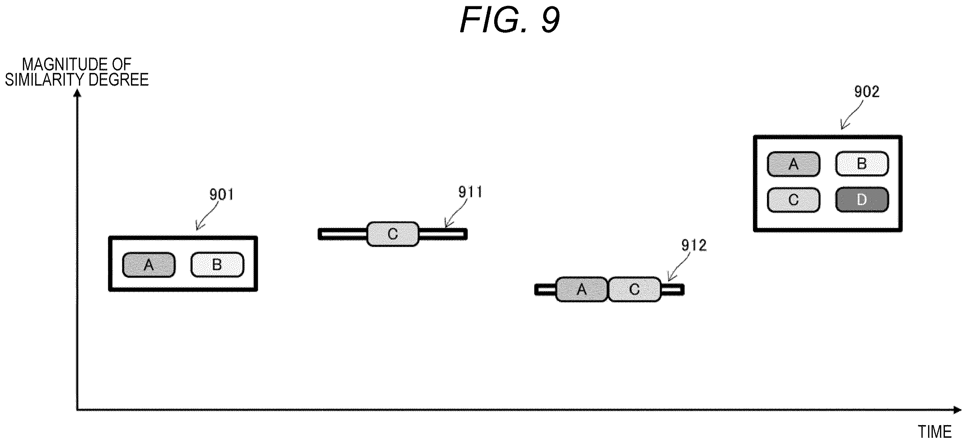

Fig. 9 illustrates an example in which a similarity degree estimation result for audio data having a long data length is visualized. The point that the visualization control unit 104 displays the transition of the similarity degree between the input audio and the search condition along the time axis of the input audio on the graph with the horizontal axis as the time axis and the vertical axis as the magnitude of the similarity degree is similar to the visualization example illustrated in Fig. 8.

In a case where utterance sections of a plurality of speakers is adjacent to each other, due to the influence of scale, it becomes difficult to display a similarity degree estimation result for each utterance section with a size that can be visually confirmed by the user, or to select only a specific utterance section (to be edited) from adjacent utterance sections. Therefore, as illustrated in Fig. 9, the similarity degree estimation results of a plurality of adjacent utterance sections are grouped, aggregated into one box 901 and one box 902, and visualized.

Each of the boxes 901 and 902 includes a rectangle indicating a position on the horizontal axis indicating the existence section of the aggregated utterance and a position on the vertical axis indicating the maximum value and the minimum value of the similarity degree with the search condition of each aggregated utterance section. In addition, in the rectangles of the boxes 901 and 902, text boxes in which the speaker ID of each aggregated utterance section, the speaker's name, and the like are indicated are displayed in different colors for each speaker. In the box 901, a text box indicating each speaker A, B in the utterance section aggregated in the box 901 is displayed. Furthermore, in the box 902, a text box indicating each speaker A, B, C, D in the utterance section aggregated in the box 902 is displayed. As illustrated in Fig. 9, by displaying the aggregated utterance sections in the box 902, it is possible to simultaneously visualize the similarity degree between a plurality of utterance sections. Note that the text information indicated in the text box is, for example, the speaker ID or the speaker's name, but is not limited thereto. In accordance with the size of the box, each text box accommodated in the box may be degenerated and displayed, or text information in the text box may be simplified (or compressed).

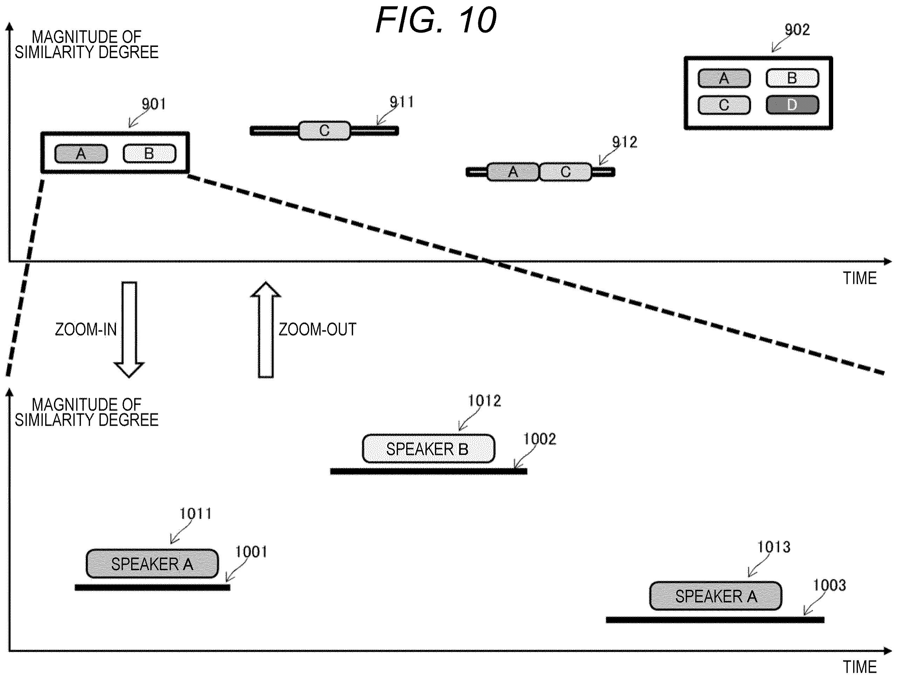

In a case where the user desires to confirm each utterance section aggregated in the box in detail, the user is only required to instruct enlarged display (zoom-in) of the box. Fig. 10 illustrates a state in which the visualization control unit 104 enlarges and displays (zooms in) the box 901 and reduces (zooms out) the box to return to the original box 901. In the example illustrated in Fig. 10, by enlarging and displaying the box 901, similarity degree indicators 1001, 1002, and 1003 corresponding to short utterance sections of the speakers A and B are individually displayed, and text boxes 1011, 1012, and 1013 corresponding to the similarity degree indicators 1001, 1002, and 1003 are arranged in the vicinity of the similarity degree indicators 1001, 1002, and 1003, respectively. Then, it is visualized that the similarity degree indicators 1001 and 1003 corresponding to the utterance section of the speaker A are arranged at low positions on the vertical axis, and the similarity degree indicator 1002 corresponding to the utterance section of the speaker B is arranged at a high position on the vertical axis.

In this way, by enlarging and displaying the box, it is possible to simultaneously visualize each utterance section and the change of the speaker aggregated in the box, and the transition of the similarity degree with the reference audio based on the type of the audio attribute designated by the user, and to facilitate visual understanding of the user. Then, the user can easily confirm the title for each utterance section in the box through the screen in which the box is enlarged and displayed as illustrated in Fig. 10, and can easily select a desired section and edit the audio data (adjustment of reverberation and the like).

On the other hand, even if the relatively long utterance section is affected by the scale, the relatively long utterance section is not complicated with the title of other utterance sections, and thus, the visualization control unit 104 does not aggregate such an utterance section into a box. In the example illustrated in Fig. 9, the utterances of the speaker C are aggregated in a box 911. The box 911 that aggregates a plurality of utterances is not necessarily wide in the vertical direction. In addition, a box 912 aggregates utterances of the speaker A and the speaker C. Since the change in the similarity degree between the audios uttered by the speaker A and the speaker C is small, the box 912 has a shape closer to an elongated bar called a box.

### D-3. Simultaneous Visualization of Plurality of Attributes

In a case where the user simultaneously designates a plurality of types of audio attributes as the audio search condition, the similarity degree estimation unit 102 estimates the similarity degree of the input audio for each of the designated plurality of types of audio attributes, and the visualization control unit 104 visualizes the similarity degree estimation results for the plurality of types of audio attributes. The visualization control unit 104 can use any one of two patterns of a method of simultaneously visualizing similarity degree estimation results for a plurality of types of audio attributes and a method of integrating a plurality of designated types of audio attributes and treating them as one large condition to estimate and visualize the similarity degree of the input audio. Which pattern is used for audio search and visualization may be determined depending on the user. It should be noted that setting a plurality of search conditions does not necessarily mean searching separately for each search condition. In the case of searching separately for each search condition, it is necessary to visualize each type of attribute, and a method of simultaneous visualization in this case will be described in the section D-3.

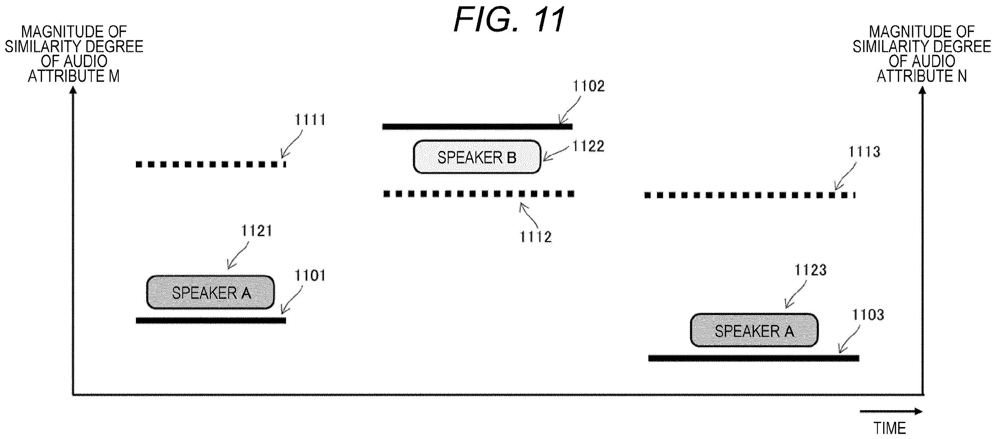

Fig. 11 illustrates an example in which the transition of the similarity degree for a plurality of audio attributes is simultaneously visualized. Here, it is assumed that the transition of the similarity degree for the two types of audio attributes M and N is simultaneously visualized. Similarly to the example illustrated in Fig. 8, the visualization control unit 104 displays the similarity degree indicator indicating the similarity degree with the search condition for each utterance section along the time axis of the input audio on the graph with the horizontal axis as the time axis and the vertical axis as the magnitude of the similarity degree.

In Fig. 11, the input audio is audio data including utterance audios of two speakers A and B. The visualization control unit 104 doubly assigns the vertical axis to the audio attributes M and N, and superimposes and indicates the similarity degree indicators 1101, 1102, 1103, ... representing the similarity degree M with the reference audio based on the type of the audio attribute for each utterance section and the similarity degree indicators 1111, 1112, 1113, ... representing the similarity degree N with the reference audio based on the type of the audio attribute on the same graph. Then, the similarity degree indicators 1101, 1102, 1103, ... indicating the similarity degree to the audio attribute M are indicated by solid lines, and the similarity degree indicators 1111, 1112, 1113, ... indicating the similarity degree to the audio attribute N are indicated by dotted lines, so that the visibility of the similarity degree for each audio attribute is secured. Furthermore, similarity to the example illustrated in Fig. 8, text boxes 1121, 1122, 1123, ... in which text information such as a speaker ID and a speaker's name is indicated are also arranged on the same graph for each utterance section.

According to the visualization example illustrated in Fig. 11, it is possible to visualize the similarity degree estimation results for a plurality of audio attributes by superimposing the similarity degree estimation results on the same graph, but if a plurality of similarities is displayed on the same graph, visibility may be lowered. For example, a plurality of types of similarity degree indicators arranged in each utterance section is complicated, and it becomes difficult for the user to confirm the title.

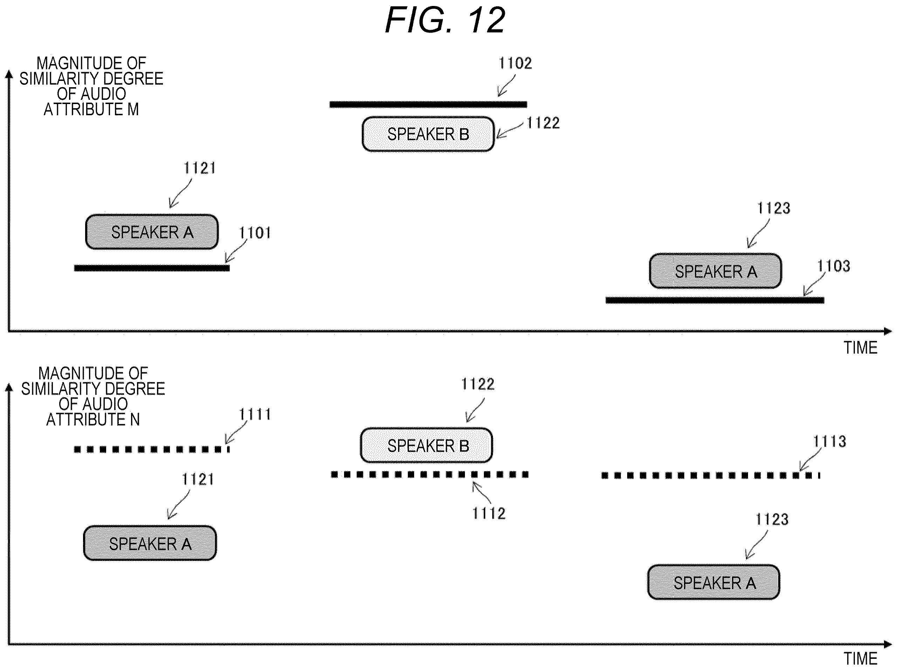

Fig. 12 illustrates another example in which the transition of the similarity degree for a plurality of audio attributes is simultaneously visualized. Here, too, it is assumed that the transition of the similarity degree for the two types of audio attributes M and N is simultaneously visualized. Similarly to the example illustrated in Fig. 8, the visualization control unit 104 displays the similarity degree indicator indicating the similarity degree with the search condition for each utterance section along the time axis of the input audio on the graph with the horizontal axis as the time axis and the vertical axis as the magnitude of the similarity degree. However, unlike the example illustrated in Fig. 11, the similarity degree indicators 1101, 1102, 1103, ... indicating the similarity degree with respect to the audio attribute M and the similarity degree indicators 1111, 1112, 1113, ... indicating the similarity degree with respect to the audio attribute N are indicated in parallel by using different graphs for different audio attributes. Furthermore, similarity to the example illustrated in Fig. 8, the text boxes 1121, 1122, 1123, **...** in which text information such as a speaker ID and a speaker's name is indicated are also arranged in each graph for each utterance section.

According to the visualization example illustrated in Fig. 12, it is possible to simultaneously visualize the similarity degree estimation results for a plurality of audio attributes, and the similarity degree indicators for each audio attribute are not complicated. Therefore, the visibility is improved as compared with the visualization example illustrated in Fig. 11.

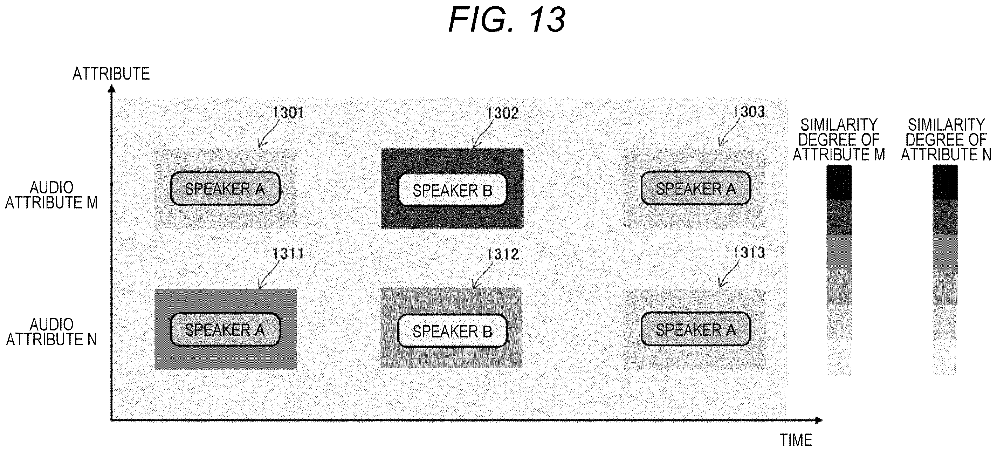

Fig. 13 illustrates still another example in which the transition of the similarity degree for a plurality of audio attributes is simultaneously visualized. Here, too, it is assumed that the transition of the similarity degree for the two types of audio attributes M and N is simultaneously visualized. The present embodiment is similar to the examples illustrated in Figs. 8, 11, and 12 in that the transition of the similarity degree is displayed along the time axis of the input audio, but is different in that the similarity degree is visualized by a heat map instead of the vertical axis.

In the example illustrated in Fig. 13, in the visualization control unit 104, with the horizontal axis as the time axis and the vertical axis as the attribute axis, rectangles 1301 to 1303 indicating the similarity degree of the audio attribute M in the heat map are arranged for each utterance section in the upper stage, and rectangles 1311 to 1313 indicating the similarity degree of the audio attribute N in the heat map is arranged for each utterance section in the lower stage, and the similarity degree with each audio attribute is displayed for each utterance section. The position on the horizontal axis of each of the rectangles 1301 to 1303 and 1311 to 1313 indicates the existence section of the corresponding utterance. Furthermore, rectangles indicating the similarity degree between the audio attributes M and N for the same utterance section are arranged on the vertical axis (attribute axis). Furthermore, in each of the rectangles 1301 to 1303 and 1311 to 1313 for each utterance section, a text box in which text information such as a speaker ID and a speaker's name is indicated is arranged.

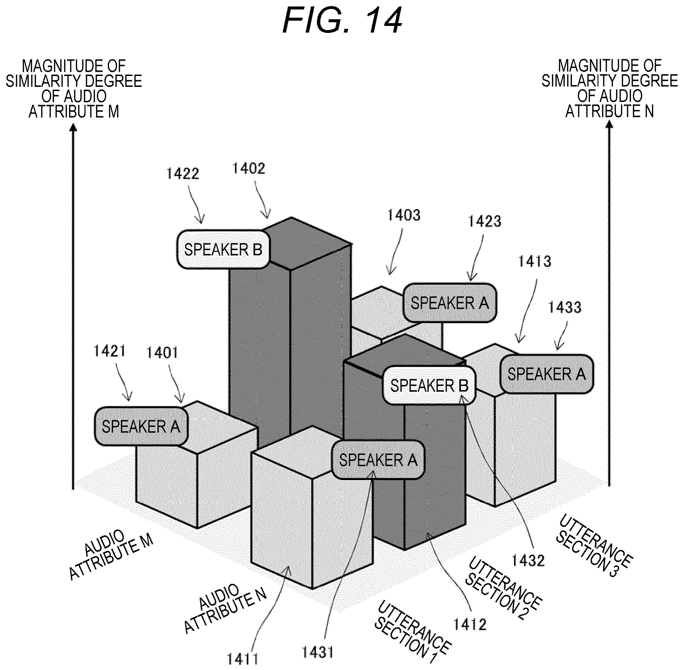

Fig. 14 illustrates still another example in which the transition of the similarity degree for a plurality of audio attributes is simultaneously visualized. Here, too, it is assumed that the transition of the similarity degree for the two types of audio attributes M and N is simultaneously visualized. In the example illustrated in Fig. 14, the visualization control unit 104 three-dimensionally displays the transition of the similarity degree along the time axis of the input audio. That is, on the three-dimensional graph in which the vertical axis of the two-dimensional horizontal plane including the time axis and the attribute axis of the input audio is the magnitude of the similarity degree, each of three-dimensional bars 1401 to 1403 having a height corresponding to the similarity degree for the audio attribute M for each utterance section is arranged at a corresponding position on the two-dimensional plane, and at the same time, each of three-dimensional bars 1411 to 1413 having a height corresponding to the similarity degree for the audio attribute N for each utterance section is arranged on the same two-dimensional plane for visualization. The positions on the time axis of each of the three-dimensional bars 1401 to 1403 and 1411 to 1413 indicate the existence sections of the corresponding utterance. Furthermore, rectangles indicating the similarity degree of the audio attributes M and N for the same utterance section are arranged on the attribute axis. In the vicinity of the upper surface of each of the three-dimensional bars 1401 to 1403, text boxes 1421 to 1423 in which text information such as a speaker ID and a speaker's name is indicated are arranged. Similarly, text boxes 1431 to 1433 are also arranged near the upper surfaces of the respective three-dimensional bars 1411 to 1413. Furthermore, each of the three-dimensional bars 1401 to 1403 and 1411 to 1413 may be indicated with a color difference for each speaker (in Fig. 14, the three-dimensional bar of the speaker A is indicated in light gray, and the three-dimensional bar of the speaker B is indicated in dark gray).

Even in a case where the transition of the similarity degree for a plurality of audio attributes is simultaneously visualized, there arises a problem that the title of each utterance section is complicated due to the influence of scale when the estimation result of the entire input audio having a long data length is displayed on one screen. Therefore, the visualization method described in the above section D-2 may be introduced and visualized.

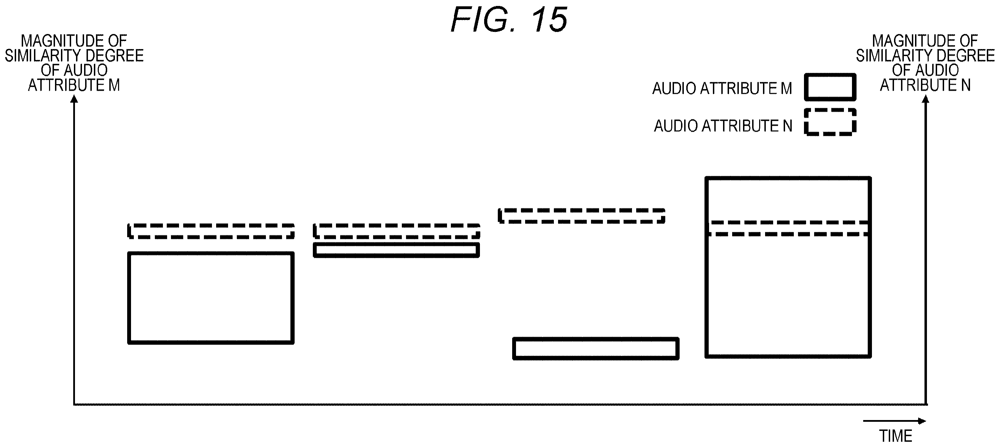

Fig. 15 illustrates an example of simultaneously visualizing the transition of the similarity degree for a plurality of audio attributes for long audio data. In the example illustrated in Fig. 15, similarly to the example illustrated in Fig. 11, the visualization control unit 104 superimposes and indicates the transition of the similarity degree for each audio attribute on the same graph, and similarly to the example illustrated in Fig. 9, aggregates and visualizes similarity degree estimation results of a plurality of adjacent utterance sections in one box. Each box includes a rectangle indicating a position on the horizontal axis indicating the existence section of the aggregated utterance and a position on the vertical axis indicating the maximum value and the minimum value of the similarity degree with the search condition of each aggregated utterance section.

By changing the line type (solid line, dotted line, one-dot chain line, etc.) of each box for each audio attribute, it is possible to enhance the visibility of the transition of the similarity degree for each audio attribute. In the example illustrated in Fig. 15, the visualization control unit 104 indicates the box of the audio attribute M with a solid line and the box of the audio attribute N with a dotted line. That is, the vertical axis is doubly assigned to the audio attributes M and N, the box obtained by aggregating the similarity degree estimation results for the audio attribute M is indicated by a solid line, and the box obtained by aggregating the similarity degree estimation results for the audio attribute N is indicated by a dotted line, so that two types of boxes are arranged for each utterance section.

Similarly to the example illustrated in Fig. 11, the visualization control unit 104 can mark a text box in which the speaker ID, the speaker's name, and the like of each aggregated utterance section are indicated in the rectangle of each box. However, in Fig. 15, in order to simplify the drawing and prevent complication, the title of the text box is omitted.

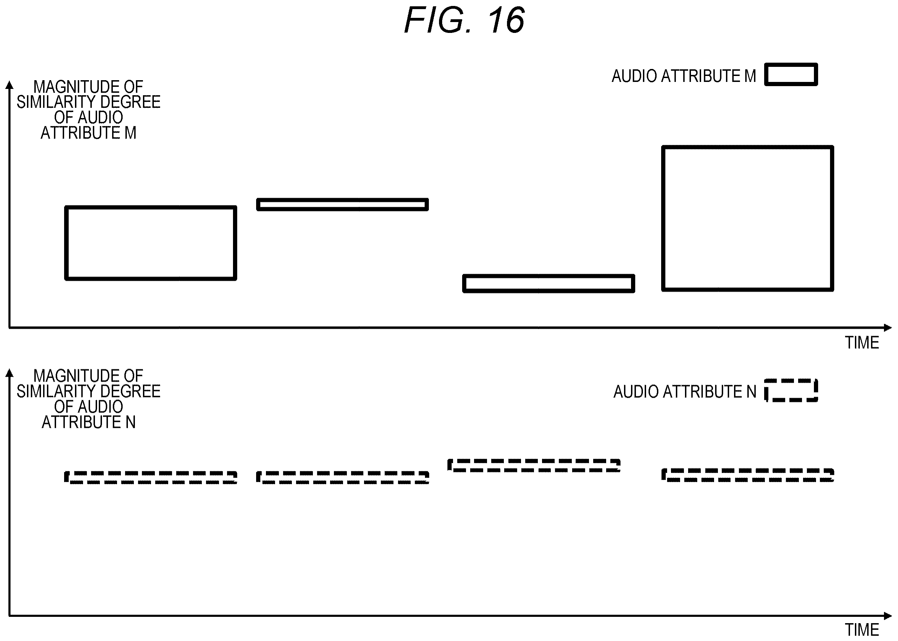

Fig. 16 illustrates another example of simultaneously visualizing the transition of the similarity degree for a plurality of audio attributes for long audio data. In the example illustrated in Fig. 16, similarly to the example illustrated in Fig. 12, the visualization control unit 104 prevents complication by using different graphs for different audio attributes and indicating the transition of the similarity degree for each audio attribute, and similarly to the example illustrated in Fig. 9, aggregates and visualizes similarity degree estimation results of a plurality of adjacent utterance sections in one box.

Also in the example illustrated in Fig. 16, the visualization control unit 104 indicates the box of the audio attribute M by a solid line and indicates the box of the audio attribute N by a dotted line. That is, unlike the example illustrated in Fig. 15, the box indicated by the solid line in which the similarity degree estimation results for the audio attribute M are aggregated and the box indicated by the dotted line in which the similarity degree estimation results for the audio attribute N are aggregated are indicated in parallel using different graphs for each audio attribute by using different graphs for different audio attributes and doubly assigning the vertical axis to the audio attributes M and N.

Also in each of the visualization examples illustrated in Figs. 15 and 16, similarly to the example illustrated in Fig. 12, the visualization control unit 104 can mark a text box in which the speaker ID, the speaker's name, and the like of each aggregated utterance section are indicated in the rectangle of each box. However, in Figs. 15 and 16, in order to simplify the drawing and prevent complication, the title of the text box is omitted.

In each of the visualization examples illustrated in Figs. 15 and 16, in a case where the user desires to confirm each utterance section aggregated in the box in detail, the user is only required to instruct enlarged display (zoom-in) of the box, similarly to the example illustrated in Fig. 10. By enlarging and displaying the box, it is possible to simultaneously visualize each utterance section and the change of the speaker aggregated in the box, and the transition of the similarity degree with the reference audio based on the type of the audio attribute designated by the user, and to facilitate visual understanding of the user. The user can easily confirm the title for each utterance section in the box through the screen in which the box is enlarged and displayed, and can easily select a desired section and edit the audio data (adjustment of reverberation and the like) (the same as above). However, an enlarged display example for each of the visualization examples illustrated in Figs. 15 and 16 is not illustrated.

### E. Processing Operation

In this section E, the processing operation performed on the audio processing apparatus 100 described in the above section B will be described.

### E-1. Overall Operation

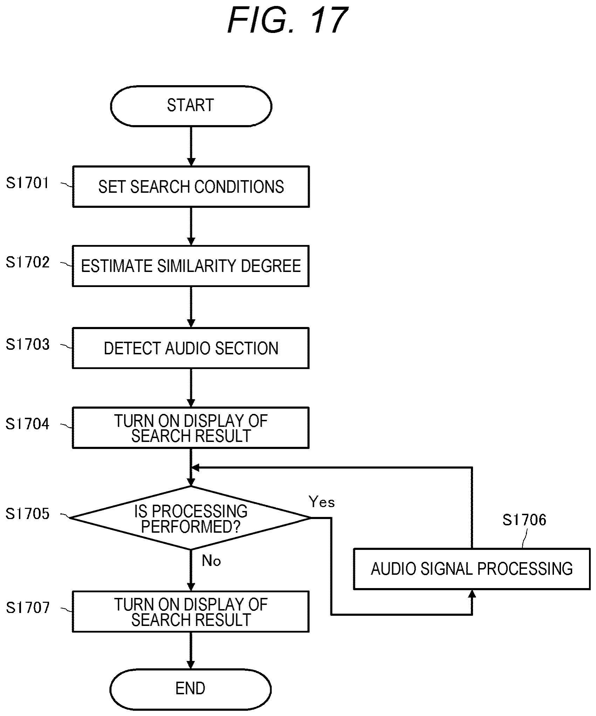

Fig. 17 illustrates a processing procedure for searching for a desired audio section from an input audio such as recorded data and performing audio signal processing in the audio processing apparatus 100 in the form of a flowchart.

First, the search condition setting unit 101 receives the reference audio and the type of the desired audio attribute as the search conditions, performs necessary preprocessing, sets the search conditions, and outputs the search conditions to the similarity degree estimation unit 102 (step S1701). Next, when audio data to be subjected to audio search is input and the search condition set by the search condition setting unit 101 is received, the similarity degree estimation unit 102 directly estimates the similarity degree between the input audio and the search condition (step S1702). Note that step S1701 and step S1702 may be simultaneously performed in parallel.

As illustrated in Fig. 6, the search condition setting unit 101 receives reverberation as the type of the audio attribute together with the reference audio. If reference audio is used instead of a fine numerical value of the audio attribute, the intention of the creator can also be estimated. It is only required for the user to provide only "reverberation" as the type of the audio attribute, and the user does not need to provide the type of the audio attribute with specific words such as "Japanese room" as long as the reference audio expressing the desired "impression brought by the numerical characteristic of reverberation" is provided. Then, the similarity degree estimation unit 102 estimates the similarity degree between the input audio and the reference audio on the basis of the reverberation designated as the audio attribute without considering the audio of the man B included in the reference audio, and can obtain the transition of the similarity degree along the time axis of the input audio as illustrated in the lower part of Fig. 7.

Next, upon receiving the similarity degree between the input audio and the search condition from the similarity degree estimation unit 102, the audio section detection unit 103 detects an audio section in which the similarity degree with the search condition exceeds a threshold in the input audio as an audio section desired by the user as illustrated in the lower part of Fig. 7, and outputs the audio section to the visualization control unit 104 and the audio signal processing unit 105 in the subsequent stage (step S1703).

Next, when the display of the search result is turned on (step S1704), the visualization control unit 104 appropriately controls the visualization of the similarity degree between the input audio and the search condition received from the similarity degree estimation unit 102 and the display of the audio section detection result received from the audio section detection unit 103.

For example, as illustrated in Fig. 8, the visualization control unit 104 performs UI display of the transition of the similarity degree estimated for each audio section along the time axis of the editing file. For example, as illustrated in Figs. 9 to 16, the visualization control unit 104 automatically adjusts the visualization method of the similarity degree estimation result according to the length of the audio data presented on the UI and the number of titles for the audio data (the number of audio sections hit in the audio search, and the like).

The user can find the search condition designated by the user, that is, the reference audio and the audio section having a high similarity degree to the type of the audio attribute as the audio section to be subjected to the audio signal processing through the UI screen illustrated in Figs. 8 to 16, for example. Then, in a case where the audio section in which the audio signal processing is performed is found from the input audio (Yes in step S1705), the audio signal processing unit 105 performs the audio signal processing desired by the user on the audio section (step S1706).

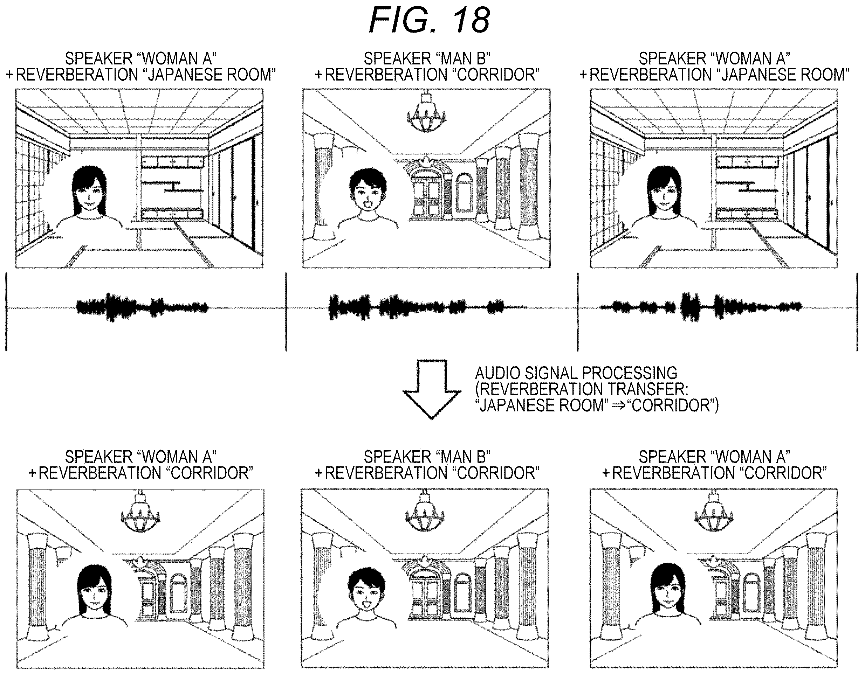

The audio signal processing unit 105 includes functions such as reverberation transition and various types of audio enhancement. For example, when the similarity degree estimation unit 102 estimates the similarity degree to the input audio illustrated in Fig. 5 on the basis of the search condition illustrated in Fig. 6, the audio section detection unit 103 can detect an utterance section in which the speaker is a woman A and the reverberation is "Japanese room" as illustrated in Fig. 7. Then, when the audio signal processing unit 105 performs reverberation transfer processing of replacing reverberation from "Japanese room" to "corridor", as shown in Fig. 18, in an utterance section where the speaker is the woman A and the reverberation is "Japanese room", the speaker remains the woman A and the reverberation is transferred to "corridor".

The processing in steps S1705 to S1706 is performed on all the audio sections detected from the input audio. Then, when the audio section in which the audio signal processing is performed is not found from the input audio (No in step S1705), the display of the search result is turned off (step S1707), and the audio processing apparatus 100 ends this processing.

### E-2. Automatic Adjustment of Visualization Method

In the above description, with reference to Figs. 9 to 10, 15, and 16, it has been described that the visualization method of the similarity degree estimation result is automatically adjusted according to the length of the audio data presented on the GUI and the number of titles (the number of audio sections hit in the audio search, etc.) for the audio data. In the section E-2, a processing operation of automatically adjusting the visualization method of the similarity degree estimation result in the audio processing apparatus 100 will be described.

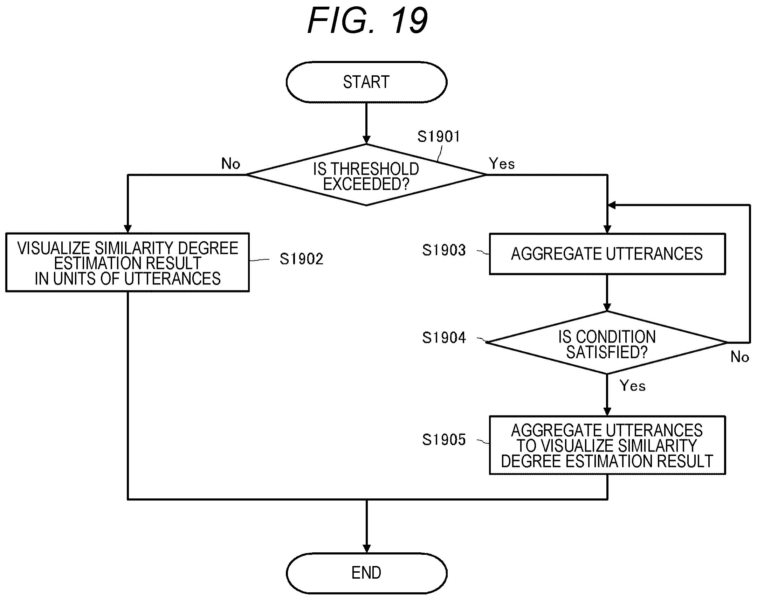

Fig. 19 illustrates a processing procedure for automatically adjusting the visualization method of the similarity degree estimation result in the audio processing apparatus 100 in the form of a flowchart.

First, the visualization control unit 104 checks whether the number of titles for the audio data presented on the GUI exceeds a threshold (step S1901).

In a case where the number of titles for the audio data presented on the GUI is less than the threshold (No in step S1901), the visualization control unit 104 visualizes the similarity degree estimation result by the similarity degree estimation unit 102 in units of utterances without aggregating a plurality of adjacent utterance sections (step S1902), and ends the present processing.

On the other hand, in a case where the number of titles for the audio data presented on the GUI exceeds the threshold (Yes in step S1901), the visualization control unit 104 aggregates the utterances by a predetermined method (step S1903). Specifically, the visualization control unit 104 equally divides the audio section displayed as a GUI at a constant rate. Then, utterances are aggregated for each divided section.

Next, the visualization control unit 104 checks whether or not the results aggregated in step S1903 satisfy a predefined constraint condition (step S1904).

As the constraint conditions mentioned here, the following can be exemplified.
· One utterance is always contained in only one box.
· The silent sections are not aggregated.
· The maximum width of the aggregated box is equal to or less than a certain ratio of the interval presented by the GUI.
· Set the maximum value for the number of boxes

Here, in a case where the result of aggregation in step S1903 does not satisfy the predefined constraint condition (No in step S1904), the visualization control unit 104 returns to step S1903, adjusts the aggregation method, and attempts to aggregate the utterances again.

Furthermore, in a case where the result aggregated in step S1903 satisfies the predefined constraint condition (Yes in step S1904), the visualization control unit 104 displays the aggregation result on the GUI, visualizes the similarity degree estimation result by the similarity degree estimation unit 102 in units of utterances (step S1905), and ends the present processing.

### F. Configuration of Information Processing Apparatus

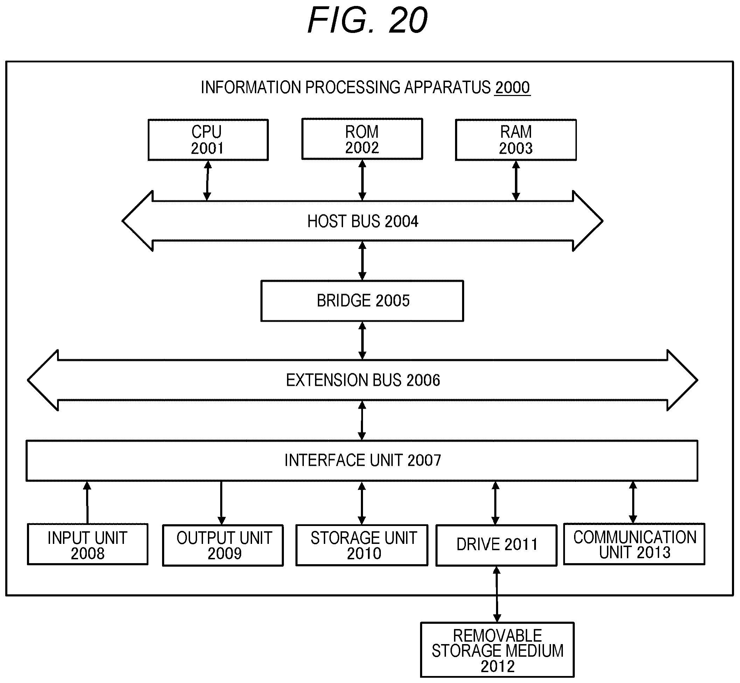

In this section F, a hardware configuration of an information processing apparatus that can operate as the audio processing apparatus 100 described in the section B will be described. Fig. 20 illustrates a hardware configuration example of an information processing apparatus 2000.

The information processing apparatus 2000 illustrated in Fig. 20 includes a CPU 2001, a read only memory (ROM) 2002, a random access memory (RAM) 2003, a host bus 2004, a bridge 2005, an extension bus 2006, an interface unit 2007, an input unit 2008, an output unit 2009, a storage unit 2010, a drive 2011, and a communication unit 2013.

The CPU 2001 functions as an arithmetic processing apparatus and a control apparatus, and controls the overall operation of the information processing apparatus 2000 according to various programs. The ROM 2002 stores programs (a basic input/output system, or the like) and calculation parameters to be used by the CPU 2001 in a non-volatile manner. The RAM 2003 is used to load a program to be used in execution of the CPU 2001 and temporarily store parameters such as work data that appropriately changes during program execution. Examples of the program to be loaded into the RAM 2003 and executed by the CPU 2001 include various application programs, an operating system (OS), and the like.

The CPU 2001, the ROM 2002, and the RAM 2003 are interconnected by the host bus 2004 including a CPU bus or the like. Then, the CPU 2001 operates in conjunction with the ROM 2002 and the RAM 2003 to execute various application programs under an execution environment provided by the OS, thereby enabling various functions and services to be implemented. In a case where the information processing apparatus 2000 is a personal computer, the OS is, for example, Windows (registered trademark) or Unix (registered trademark) of Microsoft Corporation. In addition, the application program includes an application for executing the processing procedure illustrated in Figs. 17 and 19 or an application for the information processing apparatus 2000 to operate as each of the functional blocks 101 to 105 of the audio processing apparatus 100 illustrated in Fig. 1.

The host bus 2004 is connected to the extension bus 2006 via the bridge 2005. The extension bus 2006 is, for example, a peripheral component interconnect (PCI) bus or PCI Express, and the bridge 2005 is based on the PCI standard. Then, the information processing apparatus 2000 does not necessarily have a configuration in which circuit components are separated by the host bus 2004, the bridge 2005, and the extension bus 2006, and thus may be configured in such a way that almost all circuit components are implemented by being interconnected using a single bus (not illustrated).

The interface unit 2007 connects peripheral devices such as the input unit 2008, the output unit 2009, the storage unit 2010, the drive 2011, and the communication unit 2013 according to the standard of the extension bus 2006. However, all of the peripheral devices illustrated in Fig. 20 are not necessarily important, and the information processing apparatus 2000 may further include a peripheral device (not illustrated). Furthermore, the peripheral device may be built in the main body of the information processing apparatus 2000, or some peripheral devices may be externally connected to the main body of the information processing apparatus 2000.

The input unit 2008 includes an input control circuit or the like that generates an input signal on the basis of an input from a user and outputs the input signal to the CPU 2001. In a case where the information processing apparatus 2000 is a personal computer, the input unit 2008 may include a keyboard, a mouse, and a touch panel, and may further include a camera and a microphone. Further, in a case where the information processing apparatus 2000 is an information terminal such as a smartphone or a tablet, the input unit 2008 is, for example, a touch panel, a camera, or a microphone, and may further include another mechanical operator such as a button.

The output unit 2009 includes a sound output device such as a speaker and a headphone. Furthermore, the output unit 2009 includes, for example, a display device such as a liquid crystal display (LCD), an organic EL display, and a light emitting diode (LED).

The storage unit 2010 stores files such as programs (application, OS, etc.) to be executed by the CPU 2001 and various pieces of data. The data stored in the storage unit 2010 may include a corpus (described above) of regular speeches and whispers for training of a neural network. Although the storage unit 2010 includes, for example, a mass storage device such as a solid state drive (SSD) or a hard disk drive (HDD), it may include an external storage device.

A removable storage medium 2012 includes a cartridge-type storage medium such as a micro-SD card, for example. The drive 2011 performs reading and writing operations on a removable storage medium 113 loaded therein. The drive 2011 outputs data read from the removable recording medium 2012 to the RAM 2003 and the storage unit 2010, and writes data on the RAM 2003 and the storage unit 2010 to the removable recording medium 2012.

The communication unit 2013 is a device that performs wireless communication such as Wi-Fi (registered trademark), Bluetooth (registered trademark), or a cellular communication network such as 4G or 5G. Furthermore, the communication unit 2013 may include a terminal such as a universal serial bus (USB) or a high definition multimedia interface (HDMI (registered trademark)), and may further include a function of performing HDMI (registered trademark) communication with a USB device such as a scanner or a printer, a display, or the like.

The information processing apparatus 2000 may be, for example, a general computer system such as a personal computer (PC). The information processing apparatus 2000 may execute the audio editing software and provide the function of each of the components 101 to 105 of the audio processing apparatus 100 as a plug-in that extends the function of the audio editing software. Furthermore, the audio processing apparatus 100 can be constructed using one information processing apparatus 2000, but the audio processing apparatus 100 may be constructed by combining a plurality of information processing apparatuses 2000.

### INDUSTRIAL APPLICABILITY

The present disclosure is described in detail with reference to the specific embodiments. However, the present disclosure should not be construed as being limited to the above-described embodiments, and those skilled in the art obviously can make modifications and substitutions of the embodiments without departing from the gist of the present disclosure. Additionally, the effects described in the present specification are each merely an example, thus, the effects brought by an embodiment of the present disclosure are not limited and may include an additional effect that is not described herein.

In the present specification, the embodiment in which the present disclosure is applied to production of movie content has been mainly described, but the gist of the present disclosure is not limited thereto. The present disclosure can be applied to editing various audio data other than an editing file for movie content, set a search condition so as to be convenient for a user and not to degrade user experience, and accurately detect an audio section intended by the user, leading to improvement of work efficiency and work accuracy of audio editing.

In short, the present disclosure has been described in an illustrative manner, and the contents disclosed in the present specification should not be interpreted in a limited manner. To determine the subject matter of the present disclosure, the claims should be taken into consideration.

The series of processing described in the present specification can be executed by hardware, software, or a configuration in which hardware and software are combined. In a case where the processing is executed by software, a program recorded with a processing sequence related to implementation of the present disclosure is installed and executed in a memory incorporated in dedicated hardware in a computer. It is also possible to install a program in a general-purpose computer capable of executing various types of processing and cause the computer to execute the processing related to implementation of the present disclosure.

The program can be stored in advance in a recording medium provided in the computer, such as an HDD, an SSD, or a ROM as a recording medium. Alternatively, the program can be temporarily or permanently stored in a removable recording medium such as a flexible disk, a compact disc read only memory (CD-ROM), a magneto optical (MO) disk, a digital versatile disc (DVD), a Blu-Ray disc (BD) (registered trademark), a magnetic disk, or a USB) memory. Using such a removable recording medium enables a program related to implementation of the present disclosure as so-called package software to be provided.

Additionally, the program may be transferred from a download site to a computer in a wireless or wired manner via a network such as a wide area network (WAN) typified by a cellular network, a local area network (LAN), or the Internet. The computer can receive the program thus transferred and cause the program to be installed in a mass storage device such as an HDD or an SSD in the computer.

Note that the present disclosure may also have the following configurations.

(1) An information processing apparatus including:
   a search condition setting unit that sets a search condition based on a combination of a reference audio and a type of an audio attribute; and
   a similarity degree estimation unit that estimates a similarity degree between an input audio and the search condition.
(2) The information processing apparatus according to (1), in which
   the similarity degree estimation unit estimates a similarity degree between the input audio and the reference audio on the basis of a type of an audio attribute by using a learned model.
(3) The information processing apparatus according to any one of (1) and (2), further including
   an audio section detection unit that detects an audio section having a high similarity degree in the input audio on the basis of a result of estimation by the similarity degree estimation unit.
(4) The information processing apparatus according to (3), in which
   the audio section detection unit detects an audio section in which a similarity degree exceeds a threshold in the input audio as an audio section desired by a user.
(5) The information processing apparatus according to (4), in which
   the threshold is adjustable by a user.
(6) The information processing apparatus according to any one of (1) to (5), further including
   a visualization control unit that controls visualization display of an estimation result of the similarity degree estimation unit.
(7) The information processing apparatus according to (6), in which
   the visualization control unit performs control to display a transition of the similarity degree estimated by the similarity degree estimation unit along a time axis of the input audio.
(8) The information processing apparatus according to any one of (6) and (7), in which
   the visualization control unit displays a similarity degree indicator in a vicinity of a position on a first axis indicating an existence section of a corresponding utterance and a position on a second axis indicating a similarity degree with a search condition on a graph having the first axis as a time axis and the second axis as a magnitude of a similarity degree.
(8-1) The information processing apparatus according to (8), in which
   the similarity degree indicator includes a line parallel to the first axis.
(9) The information processing apparatus according to (8), in which
   the visualization control unit further displays, in a vicinity of the similarity degree indicator, a text box having a different color for each speaker and indicated with the speaker.
(10) The information processing apparatus according to any one of (8) and (9), in which
   the visualization control unit adjusts a visualization method of an audio search result according to a length of audio data to be displayed or a number of titles for the audio data to be displayed (a number of audio sections hit in the audio search, or the like).
(11) The information processing apparatus according to (10), in which
   the visualization control unit groups a plurality of adjacent utterance sections and aggregates and displays the groups in one box.
(12) The information processing apparatus according to (11), in which
   the visualization control unit displays a box including a rectangle indicating a position on a first axis indicating an existence section of each aggregated utterance and a position on a second axis indicating a maximum value and a minimum value of a similarity degree with a search condition of each aggregated utterance section.
(13) The information processing apparatus according to (12), in which
   the visualization control unit displays a text box in which a speaker of each aggregated utterance section is indicated in a different color for each speaker in a box rectangle.
(14) The information processing apparatus according to (13), in which
   the visualization control unit enlarges and displays a box, and individually displays a similarity degree indicator of each utterance section aggregated in the box.
(15) The information processing apparatus according to any one of (6) to (14), in which
   in a case where a plurality of audio attributes is set as the search condition, the similarity degree estimation unit estimates a similarity degree for each set audio attribute, and the visualization control unit simultaneously visualizes a similarity degree estimation result for each audio attribute.
(16) The information processing apparatus according to (15), in which
   the visualization control unit superimposes and displays similarity degree indicators indicating a similarity degree estimated for each audio attribute in each utterance section by different line types on the same graph with a first axis as a time axis and a second axis as a magnitude of a similarity degree.
(17) The information processing apparatus according to (15), in which
   the visualization control unit arranges a graph with a first axis as a time axis and a second axis as a magnitude of a similarity degree for each audio attribute, and displays similarity degree indicators indicating a similarity degree estimated for each audio attribute in each utterance section in parallel with each graph.
(18) The information processing apparatus according to (15), in which
   the visualization control unit performs heat map display of a similarity degree estimated for each audio attribute in each utterance section on a graph having a first axis as a time axis and a second axis as an attribute axis.
(19) The information processing apparatus according to (15), in which
   the visualization control unit arranges and visualizes a three-dimensional bar having a height corresponding to a similarity degree estimated for each audio attribute for each utterance section at a corresponding position on a two-dimensional horizontal plane, on a three-dimensional graph in which a vertical axis of the two-dimensional horizontal plane including a time axis and an attribute axis of an input audio is a magnitude of the similarity degree.
(20) An information processing method including:
   a search condition setting step of setting a search condition based on a combination of a reference audio and a type of an audio attribute; and
   a similarity degree estimation step of estimating a similarity degree between an input audio and a search condition using a learned model.
(21) A computer program described in a computer readable format to cause a computer to function as:
   a search condition setting unit that sets a search condition based on a combination of a reference audio and a type of an audio attribute; and
   a similarity degree estimation unit that estimates a similarity degree between an input audio and the search condition using a learned model.

### REFERENCE SIGNS LIST

- 100: Audio processing apparatus
- 101: Search condition setting unit
- 102: Similarity degree estimation unit
- 103: Audio section detection unit
- 104: Visualization control unit
- 105: Audio signal processing unit
- 200, 301, 302: DNN model
- 2000: Information processing apparatus
- 2001: CPU
- 2002: ROM
- 2003: RAM
- 2004: Host bus
- 2005: Bridge
- 2006: Extension bus
- 2007: Interface unit
- 2008: Input unit
- 2009: Output unit
- 2010: Storage unit
- 2011: Drive
- 2012: Removable recording medium
- 2013: Communication unit

## Claims

1. An information processing apparatus comprising:
a search condition setting unit that sets a search condition based on a combination of a reference audio and a type of an audio attribute; and
a similarity degree estimation unit that estimates a similarity degree between an input audio and the search condition.

2. The information processing apparatus according to claim 1, wherein
the similarity degree estimation unit estimates a similarity degree between the input audio and the reference audio on a basis of a type of an audio attribute by using a learned model.

3. The information processing apparatus according to claim 1, further comprising
an audio section detection unit that detects an audio section having a high similarity degree in the input audio on a basis of a result of estimation by the similarity degree estimation unit.

4. The information processing apparatus according to claim 3, wherein
the audio section detection unit detects an audio section in which a similarity degree exceeds a threshold in the input audio as an audio section desired by a user.

5. The information processing apparatus according to claim 4, wherein
the threshold is adjustable by a user.

6. The information processing apparatus according to claim 1, further comprising
a visualization control unit that controls visualization display of an estimation result of the similarity degree estimation unit.

7. The information processing apparatus according to claim 6, wherein
the visualization control unit performs control to display a transition of the similarity degree estimated by the similarity degree estimation unit along a time axis of the input audio.

8. The information processing apparatus according to claim 6, wherein
the visualization control unit displays a similarity degree indicator in a vicinity of a position on a first axis indicating an existence section of a corresponding utterance and a position on a second axis indicating a similarity degree with a search condition on a graph having the first axis as a time axis and the second axis as a magnitude of a similarity degree.

9. The information processing apparatus according to claim 8, wherein
the visualization control unit further displays, in a vicinity of the similarity degree indicator, a text box having a different color for each speaker and indicated with the speaker.

10. The information processing apparatus according to claim 8, wherein
the visualization control unit adjusts a visualization method of an audio search result according to a length of audio data to be displayed or a number of titles for the audio data to be displayed (a number of audio sections hit in the audio search, or the like).

11. The information processing apparatus according to claim 10, wherein
the visualization control unit groups a plurality of adjacent utterance sections and aggregates and displays the groups in one box.

12. The information processing apparatus according to claim 11, wherein
the visualization control unit displays a box including a rectangle indicating a position on a first axis indicating an existence section of each aggregated utterance and a position on a second axis indicating a maximum value and a minimum value of a similarity degree with a search condition of each aggregated utterance section.

13. The information processing apparatus according to claim 12, wherein
the visualization control unit displays a text box in which a speaker of each aggregated utterance section is indicated in a different color for each speaker in a box rectangle.

14. The information processing apparatus according to claim 13, wherein
the visualization control unit enlarges and displays a box, and individually displays a similarity degree indicator of each utterance section aggregated in the box.

15. The information processing apparatus according to claim 6, wherein
in a case where a plurality of audio attributes is set as the search condition, the similarity degree estimation unit estimates a similarity degree for each set audio attribute, and the visualization control unit simultaneously visualizes a similarity degree estimation result for each audio attribute.

16. The information processing apparatus according to claim 15, wherein
the visualization control unit superimposes and displays similarity degree indicators indicating a similarity degree estimated for each audio attribute in each utterance section by different line types on the same graph with a first axis as a time axis and a second axis as a magnitude of a similarity degree.

17. The information processing apparatus according to claim 15, wherein
the visualization control unit arranges a graph with a first axis as a time axis and a second axis as a magnitude of a similarity degree for each audio attribute, and displays similarity degree indicators indicating a similarity degree estimated for each audio attribute in each utterance section in parallel with each graph.

18. The information processing apparatus according to claim 15, wherein
the visualization control unit performs heat map display of a similarity degree estimated for each audio attribute in each utterance section on a graph having a first axis as a time axis and a second axis as an attribute axis.

19. The information processing apparatus according to claim 15, wherein
the visualization control unit arranges and visualizes a three-dimensional bar having a height corresponding to a similarity degree estimated for each audio attribute for each utterance section at a corresponding position on a two-dimensional horizontal plane, on a three-dimensional graph in which a vertical axis of the two-dimensional horizontal plane including a time axis and an attribute axis of an input audio is a magnitude of the similarity degree.

20. An information processing method comprising:
a search condition setting step of setting a search condition based on a combination of a reference audio and a type of an audio attribute; and
a similarity degree estimation step of estimating a similarity degree between an input audio and a search condition using a learned model.
